# EUROPEAN PATENT APPLICATION

(11) **EP 4 492 836 A1**
(43) Date of publication of application: **15.01.2025**
(21) Application number: 23794793.2
(22) Date of filing: 09.03.2023
(51) Int. Cl.: H04W 4/90, H04W 76/50

(54) **COMMUNICATION METHOD AND COMMUNICATION APPARATUS**

(30) Priority: 26.04.2022 CN 202210443631
(71) Applicant: Huawei Technologies Co., Ltd., Shenzhen, Guangdong 518129 (CN)
(72) Inventor: XU, Shengfeng, Shenzhen, Guangdong 518129 (CN); WENHAM, Steven James, Shenzhen, Guangdong 518129 (CN)
(74) Representative: Goddar, Heinz J.
(86) International application number: PCT/CN2023/080566
(87) International publication number: WO 2023/207357

(57) **Abstract**

This application provides a communication method and a communication apparatus. In the method, a relay terminal determines that a network accessed by the relay terminal supports an emergency service. The relay terminal sends a first message, where the first message is used for a remote terminal discovering the relay terminal. The first message is a first discovery message, and the first discovery message includes a relay service code corresponding to the emergency service; or the first message is a response message, the response message is used to respond to a second discovery message from the remote terminal, and the second discovery message includes a relay service code corresponding to the emergency service. According to the foregoing technical solution, it can be ensured that a network accessed by a relay terminal participating in a relay discovery procedure of the emergency service supports the emergency service, to ensure that a relay terminal selected by a remote terminal that expects to access the emergency service can provide a relay service for the emergency service. This facilitates transmission of the emergency service in a relay scenario.

## Description

This application claims priority to Chinese Patent Application No. 202210443631.5, filed with the China National Intellectual Property Administration on April 26, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

With rapid development of mobile communication, wide use of new service types (for example, data services such as video chat and virtual reality (virtual reality, VR)/augmented reality (augmented reality, AR)) increases a bandwidth requirement of a user. Device-to-device (device-to-device, D2D) communication allows direct communication between terminals, and the terminals may share spectrum resources with cell users under control of a cell network, so that utilization of the spectrum resources is effectively improved.

When the terminal is outside coverage of the network or a communication signal between the terminal and the network is weak, the terminal may communicate with the network through assistance of another terminal. To be specific, the communication between the terminal and the network is implemented through D2D communication between the terminal and the another terminal and communication between the another terminal and the network. The communication scenario may be referred to as a relay scenario. A terminal that is outside the coverage of the network or whose communication signal with the network is weak may be referred to as a remote terminal, and a terminal that assists the remote terminal in communicating with the network may be referred to as a relay terminal.

Currently, an emergency service (emergency service) is not considered in service transmission in the relay scenario.

### SUMMARY

This application provides a communication method and a communication apparatus, to facilitate transmission of an emergency service in a relay scenario.

According to a first aspect, a communication method is provided. The method may be performed by a relay terminal, or may be performed by a module or a unit in a relay terminal. For ease of description, the relay terminal is used as a unified name below.

The method includes: The relay terminal determines that a network accessed by the relay terminal supports an emergency service. The relay terminal sends a first message, where the first message is used for a remote terminal discovering the relay terminal. The first message is a first discovery message, and the first discovery message includes a relay service code corresponding to the emergency service; or the first message is a response message, the response message is used to respond to a second discovery message from the remote terminal, and the second discovery message includes a relay service code corresponding to the emergency service.

The emergency service herein may be a general service type (which may be referred to as an emergency service type), or may be a specific emergency service.

According to the foregoing technical solution, it can be ensured that a network accessed by a relay terminal participating in a relay discovery procedure of the emergency service supports the emergency service, to ensure that a relay terminal selected by a remote terminal that expects to access the emergency service can provide a relay service for the emergency service. This facilitates transmission of the emergency service in a relay scenario.

Optionally, that the relay terminal sends a first message includes: When the network accessed by the relay terminal supports the emergency service, the relay terminal sends the first message. Alternatively, in another description manner, after determining that the network accessed by the relay terminal supports the emergency service, the relay terminal sends the first message.

In other words, the relay terminal does not participate in the relay discovery procedure of the emergency service when the network accessed by the relay terminal does not support the emergency service, and may participate in the relay discovery procedure of the emergency service (for example, sending the first discovery message to the remote terminal or responding to the second discovery message sent by the remote terminal) only when the network accessed by the relay terminal supports the emergency service. In this way, it can be ensured that the network accessed by the relay terminal participating in the relay discovery procedure of the emergency service supports the emergency service.

Optionally, before the relay terminal determines that the network accessed by the relay terminal supports the emergency service, the method further includes: The relay terminal determines that the first message includes the relay service code corresponding to the emergency service.

In other words, if the relay service code included in the first message corresponds to the emergency service, the relay terminal may determine whether the network accessed by the relay terminal supports the emergency service. If the relay service code included in the first message does not correspond to the emergency service, the relay terminal may not determine whether the network accessed by the relay terminal supports the emergency service.

With reference to the first aspect, in a possible implementation, that the relay terminal determines that a network accessed by the relay terminal supports an emergency service includes: When at least one of the following cases is met, the relay terminal determines that the network accessed by the relay terminal supports the emergency service: The relay terminal has received an emergency service support indicator from an access and mobility management function network element or an access network device; the relay terminal has stored an emergency service support indicator; or the relay terminal has established an emergency protocol data unit (protocol data unit, PDU) session. The emergency service support indicator indicates that the network accessed by the relay terminal supports the emergency service.

With reference to any one of the first aspect or the implementations of the first aspect, in another possible implementation, the relay terminal is in an emergency registration state, the first message includes an emergency registration indicator and/or emergency registration time information, the emergency registration indicator indicates that the relay terminal is in the emergency registration state, and the emergency registration time information indicates time or remaining time in which the relay terminal is in the emergency registration state.

The foregoing technical solution helps the remote terminal select a more appropriate relay terminal. For example, the remote terminal preferentially selects a relay terminal in a non-emergency registration state. For another example, if all relay terminals that send a discovery message or a response message are in an emergency registration state, the remote terminal preferentially selects a relay terminal whose remaining time in the emergency registration state is long.

With reference to any one of the first aspect or the implementations of the first aspect, in another possible implementation, the method further includes: The relay terminal receives first configuration information from a policy control function network element, where the first configuration information includes the relay service code corresponding to the emergency service.

In other words, the policy control function network element configures the relay service code corresponding to the emergency service for the relay terminal.

With reference to any one of the first aspect or the implementations of the first aspect, in another possible implementation, the first configuration information further includes a priority of the relay service code corresponding to the emergency service, and the method further includes: The relay terminal maintains or releases a connection between the relay terminal and the remote terminal based on the priority, where the connection is used for the transmission of the emergency service.

For example, the policy control function network element configures, for the relay terminal by using the first configuration information, a plurality of relay service codes including the relay service code corresponding to the emergency service, and a priority of each of the plurality of relay service codes. The relay terminal establishes a plurality of connections to the remote terminal, and the plurality of connections are in one-to-one correspondence with the plurality of relay service codes (for example, a connection 1 corresponds to a relay service code 1 (a context of the connection 1 includes the relay service code 1), and a connection 2 corresponds to a relay service code 2 (a context of the connection 2 includes the relay service code 2)). When the relay terminal releases a part of the established connections, for example, when a transmission resource or a capability of the relay terminal is limited, the relay terminal may release a connection with a low priority of a relay service code from the plurality of established connections.

The foregoing technical solution helps the relay terminal perform connection management.

With reference to any one of the first aspect or the implementations of the first aspect, in another possible implementation, the method further includes: The relay terminal receives a direct communication request message from the remote terminal, where the direct communication request message is used to request to establish a direct communication connection, and the direct communication connection is used for the transmission of the emergency service. The relay terminal sends a second message to the access and mobility management function network element, where the second message is used to request to authorize the remote terminal to access the emergency service. The relay terminal receives an authorization result from the access and mobility management function network element. If the authorization result indicates that the remote terminal is successfully authorized to access the emergency service, the relay terminal sends a direct communication accept message to the remote terminal; or if the authorization result indicates that the remote terminal fails to be authorized to access the emergency service, the relay terminal sends a direct communication reject message to the remote terminal.

According to the foregoing technical solution, in a procedure of establishing a connection to the remote terminal, the relay terminal determines whether the network authorizes the remote terminal to access the emergency service. The relay terminal establishes the connection to the remote terminal only when the remote terminal is authorized to access the emergency service, to provide the relay service of the emergency service for the remote terminal. In this way, it can be ensured that the relay terminal selected by the remote terminal that expects to access the emergency service can provide the relay service for the emergency service, and access of an unauthorized remote terminal to the emergency service can be avoided.

With reference to any one of the first aspect or the implementations of the first aspect, in another possible implementation, the method further includes: The relay terminal receives the second discovery message from the remote terminal. The relay terminal sends a second message to the access and mobility management function network element, where the second message is used to request to authorize the remote terminal to access the emergency service. The relay terminal receives an authorization result from the access and mobility management function network element. That the relay terminal determines that a network accessed by the relay terminal supports an emergency service includes: When the authorization result indicates that the remote terminal is successfully authorized to access the emergency service, the relay terminal determines that the network accessed by the relay terminal supports the emergency service.

In the foregoing technical solution, after receiving the second discovery message of the remote terminal, the relay terminal first determines whether the network authorizes the remote terminal to access the emergency service, and further determines, when the network successfully authorizes the remote terminal to access the emergency service, whether the network accessed by the relay terminal supports the emergency service. Subsequently, the relay terminal sends or does not send the response message of the second discovery message depending on whether the network accessed by the relay terminal supports the emergency service. In this way, it can be ensured that the relay terminal selected by the remote terminal that expects to access the emergency service can provide the relay service for the emergency service, and access of an unauthorized remote terminal to the emergency service can be avoided.

With reference to any one of the first aspect or the implementations of the first aspect, in another possible implementation, before the relay terminal determines that the network accessed by the relay terminal supports the emergency service, the method further includes: The relay terminal receives the second discovery message from the remote terminal. After that the relay terminal determines that a network accessed by the relay terminal supports an emergency service, the method further includes: The relay terminal sends a second message to the access and mobility management function network element, where the second message is used to request to authorize the remote terminal to access the emergency service. The relay terminal receives an authorization result from the access and mobility management function network element. That the relay terminal sends a first message includes: When the authorization result indicates that the remote terminal is successfully authorized to access the emergency service, the relay terminal sends the response message to the remote terminal.

In the foregoing technical solution, after receiving the second discovery message of the remote terminal, the relay terminal first determines whether the network accessed by the relay terminal supports the emergency service, and further determines, when the network accessed by the relay terminal supports the emergency service, whether the network authorizes the remote terminal to access the emergency service. Subsequently, the relay terminal sends or does not send the response message of the second discovery message depending on whether the network authorizes the remote terminal to access the emergency service. In this way, it can be ensured that the relay terminal selected by the remote terminal that expects to access the emergency service can provide the relay service for the emergency service, and access of an unauthorized remote terminal to the emergency service can be avoided.

With reference to any one of the first aspect or the implementations of the first aspect, in another possible implementation, the method further includes: The relay terminal sends first information to the access and mobility management function network element, where the first information indicates that the relay service of the relay terminal is used for the emergency service, or the first information indicates that the relay terminal provides the emergency service for the remote terminal.

In other words, the relay terminal reports, to the access and mobility management function network element, that the relay terminal is in a state of providing the relay service for the emergency service or a state in which the relay terminal provides the emergency service for the remote terminal, so that the access and mobility management function network element does not limit the relay terminal in terms of access management or mobility management. For example, the relay terminal may provide the relay service for the remote terminal in a non-allowed area.

Optionally, after receiving the first information, the access and mobility management function network element stores the first information in a context of the relay terminal.

Optionally, the first information may be carried in a service request (service request) message, a PDU session establishment (PDU session establishment) message, or a registration (registration) message.

Optionally, when the PDU session establishment message carries the first information, the first information indicates that a PDU session is used for the transmission of the emergency service. In this case, the access and mobility management function network element selects, based on the first information, a session management function network element that can provide the emergency service, or the access and mobility management function network element sends the first information to a session management function network element. When the access and mobility management function network element sends the first information to the session management function network element, the session management function network element selects, based on the first information, a user plane function network element that can provide the emergency service.

With reference to any one of the first aspect or the implementations of the first aspect, in another possible implementation, the method further includes: The relay terminal sends second information to the access and mobility management function network element, where the second information indicates that providing, by the relay terminal, the emergency service for the remote terminal is canceled, or the second information indicates that the relay terminal does not provide the emergency service for the remote terminal.

In other words, the relay terminal reports, to the access and mobility management function network element, that the relay terminal is not in the state of providing the relay service for the emergency service or is in a state in which the relay terminal does not provide the emergency service for the remote terminal, so that the access and mobility management function network element limits the relay terminal in terms of the access management or the mobility management.

Optionally, after receiving the second information, the access and mobility management function network element deletes the first information from the context of the relay terminal.

Optionally, that the relay terminal sends second information to the access and mobility management function network element includes: After the relay terminal releases the connection used for the transmission of the emergency service, the relay terminal sends the second information to the access and mobility management function network element, or if the relay terminal no longer has the connection used for the transmission of the emergency service, the relay terminal sends the second information to the access and mobility management function network element.

With reference to any one of the first aspect or the implementations of the first aspect, in another possible implementation, the method further includes: The relay terminal receives a seventh message from the remote terminal, where the seventh message is used to request to establish a connection to the relay terminal, and the connection is used for the transmission of the emergency service. After receiving the seventh message, if the relay terminal has no emergency PDU session, the relay terminal requests to establish the emergency PDU session. In addition, if the relay terminal has established the emergency PDU session, the relay terminal may not request to establish the emergency PDU session.

Optionally, the connection is a direct communication connection, and the seventh message is a direct communication request message.

According to a second aspect, a communication method is provided. The method may be performed by a policy control function network element, or may be performed by a module or a unit in a policy control function network element. For ease of description, the policy control function network element is used as a unified name below.

The method includes: The policy control function network element obtains a relay service code corresponding to an emergency service. The policy control function network element sends first configuration information to a relay terminal, where the first configuration information includes the relay service code corresponding to the emergency service.

The emergency service herein may be a general service type (which may be referred to as an emergency service type), or may be a specific emergency service.

In the foregoing technical solution, the policy control function network element configures the relay service code corresponding to the emergency service for the relay terminal, so that the relay terminal can participate in a relay discovery procedure of the emergency service, to facilitate transmission of the emergency service in a relay scenario.

With reference to the second aspect, in a possible implementation, the first configuration information further includes a priority of the relay service code corresponding to the emergency service.

The foregoing technical solution helps the relay terminal perform connection management. For example, the policy control function network element configures, for the relay terminal by using the first configuration information, a plurality of relay service codes including the relay service code corresponding to the emergency service, and a priority of each of the plurality of relay service codes. The relay terminal establishes a plurality of connections to a remote terminal, and the plurality of connections are in one-to-one correspondence with the plurality of relay service codes (for example, a connection 1 corresponds to a relay service code 1 (a context of the connection 1 includes the relay service code 1), and a connection 2 corresponds to a relay service code 2 (a context of the connection 2 includes the relay service code 2)). When the relay terminal releases a part of the established connections, for example, when a transmission resource or a capability of the relay terminal is limited, the relay terminal may release a connection with a low priority of a relay service code from the plurality of established connections.

With reference to any one of the second aspect or the implementations of the second aspect, in another possible implementation, that the policy control function network element sends first configuration information to a relay terminal includes: When a network accessed by the relay terminal supports the emergency service, the policy control function network element sends the first configuration information to the relay terminal.

According to the foregoing technical solution, the policy control function network element provides the relay service code corresponding to the emergency service for the relay terminal only when the network accessed by the relay terminal supports the emergency service. In other words, when the network accessed by the relay terminal does not support the emergency service, the policy control function network element does not provide the relay service code corresponding to the emergency service for the relay terminal. Therefore, the relay terminal does not participate in the relay discovery procedure in which the emergency service is supported. In this way, it can be ensured that a network accessed by a relay terminal participating in the relay discovery procedure of the emergency service supports the emergency service, to ensure that a relay terminal selected by a remote terminal that expects to access the emergency service can provide a relay service for the emergency service. This facilitates the transmission of the emergency service in the relay scenario.

With reference to any one of the second aspect or the implementations of the second aspect, in another possible implementation, the method further includes: When at least one of the following cases is met, the policy control function network element determines that the network accessed by the relay terminal supports the emergency service: The policy control function network element has received an emergency service support indicator from an access and mobility management function network element; or the policy control function network element has stored or preconfigured an emergency service support indicator. The emergency service support indicator indicates that the network accessed by the relay terminal supports the emergency service.

With reference to any one of the second aspect or the implementations of the second aspect, in another possible implementation, the method further includes: The policy control function network element sends second configuration information to the remote terminal, where the second configuration information includes the relay service code corresponding to the emergency service.

In other words, the policy control function network element configures the relay service code corresponding to the emergency service for the remote terminal.

With reference to any one of the second aspect or the implementations of the second aspect, in another possible implementation, the second configuration information further includes the priority of the relay service code corresponding to the emergency service.

The foregoing technical solution helps the remote terminal perform connection management. For example, the policy control function network element configures, for the remote terminal by using the second configuration information, a plurality of relay service codes including the relay service code corresponding to the emergency service, and a priority of each of the plurality of relay service codes. The remote terminal establishes a plurality of connections to the relay terminal, and the plurality of connections are in one-to-one correspondence with the plurality of relay service codes (for example, a connection 1 corresponds to a relay service code 1 (a context of the connection 1 includes the relay service code 1), and a connection 2 corresponds to a relay service code 2 (a context of the connection 2 includes the relay service code 2)). When the remote terminal releases a part of the established connections, for example, when a transmission resource or a capability of the remote terminal is limited, the remote terminal may release a connection with a low priority of a relay service code from the plurality of established connections.

With reference to any one of the second aspect or the implementations of the second aspect, in another possible implementation, that the policy control function network element obtains a relay service code corresponding to an emergency service includes: The policy control function network element obtains the relay service code corresponding to the emergency service from an application function network element.

According to the foregoing technical solution, it can be ensured that relay service codes of different public land mobile networks (public land mobile networks, PLMNs) are consistent. Therefore, an inter-PLMN relay service used for the emergency service can be better supported.

According to a third aspect, a communication method is provided. The method may be performed by a remote terminal, or may be performed by a module or a unit in a remote terminal. For ease of description, the remote terminal is used as a unified name below.

The method includes: The remote terminal receives a first message from a first relay terminal, where the first message is used for the remote terminal discovering the first relay terminal, the first message includes an emergency registration indicator and/or emergency registration time information, the emergency registration indicator indicates that the first relay terminal is in an emergency registration state, and the emergency registration time information indicates time or remaining time in which the first relay terminal is in the emergency registration state. The remote terminal selects a relay terminal based on the first message. The first message is a first discovery message, and the first discovery message includes a relay service code corresponding to an emergency service; or the first message is a response message, the response message is used to respond to a second discovery message sent by the remote terminal, and the second discovery message includes a relay service code corresponding to an emergency service.

The foregoing technical solution helps the remote terminal select a more appropriate relay terminal, to facilitate transmission of the emergency service in a relay scenario. For example, the remote terminal preferentially selects a relay terminal in a non-emergency registration state. For another example, if all relay terminals that send a discovery message or a response message are in an emergency registration state, the remote terminal preferentially selects a relay terminal whose remaining time in the emergency registration state is long.

With reference to the third aspect, in a possible implementation, the method further includes: The remote terminal receives second configuration information from a policy control function network element, where the second configuration information includes the relay service code corresponding to the emergency service.

In other words, the policy control function network element configures the relay service code corresponding to the emergency service for the remote terminal.

With reference to any one of the third aspect or the implementations of the third aspect, in another possible implementation, the second configuration information further includes a priority of the relay service code corresponding to the emergency service, and the method further includes: The remote terminal maintains or releases a connection between the remote terminal and the relay terminal based on the priority of the relay service code corresponding to the emergency service, where the connection is used for the transmission of the emergency service.

For example, the policy control function network element configures, for the remote terminal by using the second configuration information, a plurality of relay service codes including the relay service code corresponding to the emergency service, and a priority of each of the plurality of relay service codes. The remote terminal establishes a plurality of connections to the relay terminal, and the plurality of connections are in one-to-one correspondence with the plurality of relay service codes (for example, a connection 1 corresponds to a relay service code 1 (a context of the connection 1 includes the relay service code 1), and a connection 2 corresponds to a relay service code 2 (a context of the connection 2 includes the relay service code 2)). When the remote terminal releases a part of the established connections, for example, when a transmission resource or a capability of the remote terminal is limited, the remote terminal may release a connection with a low priority of a relay service code from the plurality of established connections.

The foregoing technical solution helps the remote terminal perform connection management.

According to a fourth aspect, a communication method is provided. The method may be performed by a relay terminal, or may be performed by a module or a unit in a relay terminal. For ease of description, the relay terminal is used as a unified name below.

The method includes: The relay terminal generates a first message, where the relay terminal is in an emergency registration state, the first message includes an emergency registration indicator and/or emergency registration time information, the emergency registration indicator indicates that the relay terminal is in the emergency registration state, and the emergency registration time information indicates time or remaining time in which the relay terminal is in the emergency registration state. The relay terminal sends the first message, where the first message is used for a remote terminal discovering the relay terminal. The first message is a first discovery message, and the first discovery message includes a relay service code corresponding to an emergency service; or the first message is a response message, the response message is used to respond to a second discovery message from the remote terminal, and the second discovery message includes a relay service code corresponding to an emergency service.

The foregoing technical solution helps the remote terminal select a more appropriate relay terminal, to facilitate transmission of the emergency service in a relay scenario. For example, the remote terminal preferentially selects a relay terminal in a non-emergency registration state. For another example, if all relay terminals that send a discovery message or a response message are in an emergency registration state, the remote terminal preferentially selects a relay terminal whose remaining time in the emergency registration state is long.

With reference to the fourth aspect, in a possible implementation, the method further includes: The relay terminal receives first configuration information from a policy control function network element, where the first configuration information includes the relay service code corresponding to the emergency service.

In other words, the policy control function network element configures the relay service code corresponding to the emergency service for the relay terminal.

With reference to any one of the fourth aspect or the implementations of the fourth aspect, in another possible implementation, the first configuration information further includes a priority of the relay service code corresponding to the emergency service, and the method further includes: The relay terminal maintains or releases a connection between the relay terminal and the remote terminal based on the priority of the relay service code corresponding to the emergency service, where the connection is used for the transmission of the emergency service.

For example, the policy control function network element configures, for the relay terminal by using the first configuration information, a plurality of relay service codes including the relay service code corresponding to the emergency service, and a priority of each of the plurality of relay service codes. The relay terminal establishes a plurality of connections to the remote terminal, and the plurality of connections are in one-to-one correspondence with the plurality of relay service codes (for example, a connection 1 corresponds to a relay service code 1 (a context of the connection 1 includes the relay service code 1), and a connection 2 corresponds to a relay service code 2 (a context of the connection 2 includes the relay service code 2)). When the relay terminal releases a part of the established connections, for example, when a transmission resource or a capability of the relay terminal is limited, the relay terminal may release a connection with a low priority of a relay service code from the plurality of established connections.

The foregoing technical solution helps the relay terminal perform connection management.

With reference to any one of the fourth aspect or the implementations of the fourth aspect, in another possible implementation, the method further includes: The relay terminal receives a direct communication request message from the remote terminal, where the direct communication request message is used to request to establish a direct communication connection, and the direct communication connection is used for the transmission of the emergency service. The relay terminal sends a second message to an access and mobility management function network element, where the second message is used to request to authorize the remote terminal to access the emergency service. The relay terminal receives an authorization result from the access and mobility management function network element. If the authorization result indicates that the remote terminal is successfully authorized to access the emergency service, the relay terminal sends a direct communication accept message to the remote terminal; or if the authorization result indicates that the remote terminal fails to be authorized to access the emergency service, the relay terminal sends a direct communication reject message to the remote terminal.

According to the foregoing technical solution, in a procedure of establishing a connection to the remote terminal, the relay terminal determines whether a network authorizes the remote terminal to access the emergency service. The relay terminal establishes the connection to the remote terminal only when the remote terminal is authorized to access the emergency service, to provide a relay service of the emergency service for the remote terminal. This helps avoid access of an unauthorized remote terminal to the emergency service.

With reference to any one of the fourth aspect or the implementations of the fourth aspect, in another possible implementation, the method further includes: The relay terminal receives the second discovery message from the remote terminal. The relay terminal sends a second message to an access and mobility management function network element, where the second message is used to request to authorize the remote terminal to access the emergency service. The relay terminal receives an authorization result from the access and mobility management function network element. That the relay terminal sends the first message includes: When the authorization result indicates that the remote terminal is successfully authorized to access the emergency service, the relay terminal sends the response message to the remote terminal.

In the foregoing technical solution, after receiving the second discovery message of the remote terminal, the relay terminal determines whether a network authorizes the remote terminal to access the emergency service, and sends the response message of the second discovery message when the network successfully authorizes the remote terminal to access the emergency service. This helps avoid access of an unauthorized remote terminal to the emergency service.

With reference to any one of the fourth aspect or the implementations of the fourth aspect, in another possible implementation, the method further includes: The relay terminal sends first information to the access and mobility management function network element, where the first information indicates that the relay service of the relay terminal is used for the emergency service, or the first information indicates that the relay terminal provides the emergency service for the remote terminal.

In other words, the relay terminal reports, to the access and mobility management function network element, that the relay terminal is in a state of providing the relay service for the emergency service or a state in which the relay terminal provides the emergency service for the remote terminal, so that the access and mobility management function network element does not limit the relay terminal in terms of access management or mobility management. For example, the relay terminal may provide the relay service in a non-allowed area.

Optionally, after receiving the first information, the access and mobility management function network element stores the first information in a context of the relay terminal.

Optionally, the first information may be carried in a service request (service request) message, a PDU session establishment (PDU session establishment) message, or a registration (registration) message.

Optionally, when the PDU session establishment message carries the first information, the first information indicates that a PDU session is used for the transmission of the emergency service. In this case, the access and mobility management function network element selects, based on the first information, a session management function network element that can provide the emergency service, or the access and mobility management function network element sends the first information to a session management function network element. When the access and mobility management function network element sends the first information to the session management function network element, the session management function network element selects, based on the first information, a user plane function network element that can provide the emergency service.

With reference to any one of the fourth aspect or the implementations of the fourth aspect, in another possible implementation, the method further includes: The relay terminal sends second information to the access and mobility management function network element, where the second information indicates that providing, by the relay terminal, the emergency service for the remote terminal is canceled, or the second information indicates that the relay terminal does not provide the emergency service for the remote terminal.

In other words, the relay terminal reports, to the access and mobility management function network element, that the relay terminal is not in the state of providing the relay service for the emergency service or is in a state in which the relay terminal does not provide the emergency service for the remote terminal, so that the access and mobility management function network element limits the relay terminal in terms of the access management or the mobility management.

Optionally, after receiving the second information, the access and mobility management function network element deletes the first information from the context of the relay terminal.

Optionally, that the relay terminal sends second information to the access and mobility management function network element includes: After the relay terminal releases the connection used for the transmission of the emergency service, the relay terminal sends the second information to the access and mobility management function network element, or if the relay terminal no longer has the connection used for the transmission of the emergency service, the relay terminal sends the second information to the access and mobility management function network element.

With reference to any one of the fourth aspect or the implementations of the fourth aspect, in another possible implementation, the method further includes: The relay terminal receives a seventh message from the remote terminal, where the seventh message is used to request to establish a connection to the relay terminal, and the connection is used for the transmission of the emergency service. After receiving the seventh message, if the relay terminal has no emergency PDU session, the relay terminal requests to establish the emergency PDU session. In addition, if the relay terminal has established the emergency PDU session, the relay terminal may not request to establish the emergency PDU session.

Optionally, the connection is a direct communication connection, and the seventh message is a direct communication request message.

According to a fifth aspect, a communication method is provided. The method may be performed by an application function network element, or may be performed by a module or a unit in an application function network element. For ease of description, the application function network element is used as a unified name below.

The method includes: The application function network element determines a relay service code corresponding to an emergency service. The application function network element sends the relay service code corresponding to the emergency service to a policy control function network element.

According to the foregoing technical solution, it can be ensured that relay service codes of different PLMNs are consistent. Therefore, an inter-PLMN relay service used for the emergency service can be better supported.

According to a sixth aspect, a communication apparatus is provided. The apparatus is configured to perform the method provided in any one of the foregoing aspects or the implementations of the foregoing aspects. Specifically, the apparatus may include units and/or modules configured to perform the method provided in any one of the foregoing aspects or the implementations of the foregoing aspects, for example, a processing unit and/or a communication unit.

In an implementation, the apparatus is a relay terminal, a policy control function network element, a remote terminal, or an application function network element. When the apparatus is the relay terminal, the policy control function network element, the remote terminal, or the application function network element, the communication unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used in the relay terminal, the policy control function network element, the remote terminal, or the application function network element. When the apparatus is the chip, the chip system, or the circuit used in the relay terminal, the policy control function network element, the remote terminal, or the application function network element, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a seventh aspect, a communication apparatus is provided. The apparatus includes a memory, configured to store a program; and at least one processor, configured to execute the computer program or instructions stored in the memory, to perform the method provided in any one of the foregoing aspects or the implementations of the foregoing aspects.

In an implementation, the apparatus is a relay terminal, a policy control function network element, a remote terminal, or an application function network element.

In another implementation, the apparatus is a chip, a chip system, or a circuit used in the relay terminal, the policy control function network element, the remote terminal, or the application function network element.

According to an eighth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a ninth aspect, a processor is provided, and is configured to perform the methods provided in the foregoing aspects.

Operations such as sending and obtaining/receiving related to the processor may be understood as operations such as output and receiving or input of the processor, or may be understood as operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method provided in any one of the foregoing aspects or the implementations of the foregoing aspects.

According to an eleventh aspect, a computer program product including instructions is provided. When the computer program product runs on a computer, the computer is enabled to perform the method provided in any one of the foregoing aspects or the implementations of the foregoing aspects.

According to a twelfth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

According to a thirteenth aspect, a communication system is provided, and includes at least one of the foregoing relay terminal, policy control function network element, remote terminal, or application function network element.

### BRIEF DESCRIPTION OF DRAWINGS

FIG. 1 is a diagram of a network architecture to which a technical solution of this application may be applied;
FIG. 2 is a diagram of another network architecture to which a technical solution of this application may be applied;
FIG. 3 is a schematic flowchart of connection establishment of layer-3 relay;
FIG. 4 is a diagram of a communication method 400 according to this application;
FIG. 5 is a diagram of a communication method 500 according to this application;
FIG. 6 is a diagram of a communication method 600 according to this application;
FIG. 7 is a diagram of a communication method 700 according to this application;
FIG. 8 is a diagram of a communication method 800 according to this application;
FIG. 9 is a diagram of a structure of an apparatus according to an embodiment of this application; and
FIG. 10 is a diagram of another structure of an apparatus according to an embodiment of this application.

### DESCRIPTION OF EMBODIMENTS

The following describes technical solutions in this application with reference to accompanying drawings.

For ease of understanding embodiments of this application, before embodiments of this application are described, the following descriptions are first provided.

In this application, "indicating" may include direct indicating and indirect indicating, or "indicating" may be explicitly and/or implicitly indicating. For example, when a description is that a piece of information indicates information I, the information may directly indicate I or indirectly indicate I, but it does not mean that the information definitely carries I. For another example, the implicit indicating may be based on a location and/or a resource used for transmission; and the explicit indicating may be based on one or more parameters, one or more indexes, and/or one or more bit patterns represented by the information.

Definitions listed for many features in this application are merely used to explain functions of the features by using examples. For detailed content of the definitions, refer to a conventional technology.

In the following embodiments, first, second, third, fourth, and various numbers are merely used for differentiation for ease of description, and are not used to limit the scope of embodiments of this application, for example, used for differentiation between different fields and different information.

"Predefinition" may be implemented by pre-storing corresponding code or a table in a device (for example, including a terminal or a network device), or implemented in another manner that may indicate related information. A specific implementation of the predefinition is not limited in this application. "Storage" may be storage in one or more memories. A type of the memory may be a storage medium in any form. This is not limited in this application.

A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Aspects, embodiments, or features are presented in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, the word like "example" or "for example" is used to represent giving an example, an illustration, or a description. Any embodiment or design scheme described as an "example" in this application should not be explained as being more preferred or having more advantages than another embodiment or design scheme. Exactly, use of the word "example" is intended to present a concept in a specific manner.

The terms "include", "have", and their variants all mean "including but not limited to", unless otherwise specifically emphasized in another manner.

"At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

The technical solutions provided in this application may be applied to various communication systems, for example, a 5^{th} generation (5^{th} generation, 5G) or NR system, an LTE system, an LTE frequency division duplex (frequency division duplex, FDD) system, and an LTE time division duplex (time division duplex, TDD) system. The technical solutions provided in this application may be further applied to a non-terrestrial network (non-terrestrial network, NTN) communication system like a satellite communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system. The technical solutions provided in this application may be further applied to the future communication system, for example, a 6^{th} generation mobile communication system.

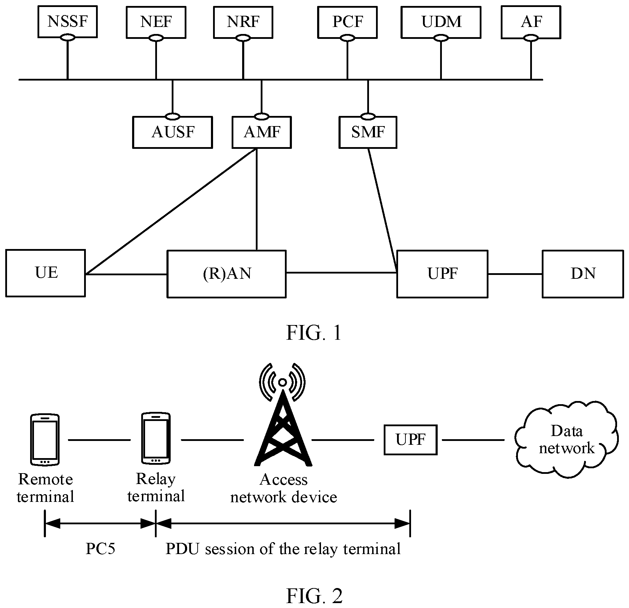

In an example, FIG. 1 is a diagram of a network architecture.

As shown in FIG. 1, a 5G system (5^{th} generation system, 5GS) is used as an example of the network architecture. The network architecture may include three parts: a user equipment (user equipment, UE) part, a data network (data network, DN) part, and an operator network part. The operator network may include one or more of the following network elements: a (radio) access network ((radio) access network, (R)AN) device, a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function library function (network repository function, NRF) network element, a policy control function (policy control function, PCF) network element, a unified data management (unified data management, UDM) network element, and an application function (application function, AF) network element. In the foregoing operator network, a part other than a RAN part may be referred to as a core network part.

In this application, the user equipment, the (radio) access network device, the UPF network element, the AUSF network element, the AMF network element, the SMF network element, the NSSF network element, the NEF network element, the NRF network element, the PCF network element, the UDM network element, and the AF network element are respectively referred to as UE, a (R)AN, a UPF, an AUSF, a UDR, an AMF, an SMF, an NSSF, a NEF, an NRF, a PCF, a UDM, and an AF for short.

The UE, the (R)AN, the UPF, and the DN in FIG. 1 are generally referred to as data plane network functions or entities. Transmission of data of the UE may be performed by using a PDU session established between the UE and the DN. The following briefly describes the network elements in FIG. 1.

### 1. UE

The UE in this application may also be referred to as a terminal, a user, an access terminal, a subscriber unit, a subscriber station, a mobile station, a remote station, a remote terminal, a mobile device, a user terminal, a terminal device, a wireless communication device, a user agent, a user apparatus, or the like. For ease of description, the terminal is used as a unified name below.

The terminal is a device that can access a network. The terminal and the (R)AN may communicate with each other by using an air interface technology (for example, an NR or LTE technology). Terminals may also communicate with each other by using an air interface technology (for example, the NR or LTE technology). The terminal may be a mobile phone (mobile phone), a pad (pad), a computer with a wireless transceiver function, a virtual reality (virtual reality, VR) terminal, an augmented reality (augmented reality, AR) terminal, a terminal in satellite communication, a terminal in an integrated access and backhaul (integrated access and backhaul, IAB) link system, a terminal in a Wi-Fi communication system, a terminal in industrial control (industrial control), a terminal in self-driving (self-driving), a terminal in remote medical (remote medical), a terminal in a smart grid (smart grid), a terminal in transportation safety (transportation safety), a terminal in a smart city (smart city), a terminal in a smart home (smart home), or the like.

A specific technology and a specific device form used by the UE are not limited in this embodiment of this application.

### 2. (R)AN

The (R)AN in this application may be a device configured to communicate with the terminal, or may be a device that connects the terminal to a wireless network.

The (R)AN may be a node in a radio access network. The (R)AN may be a base station (base station), an evolved NodeB (evolved NodeB, eNodeB), a transmission reception point (transmission reception point, TRP), a home base station (for example, a home evolved NodeB or a home NodeB, HNB), a Wi-Fi access point (access point, AP), a mobile switching center, a next generation NodeB (next generation NodeB, gNB) in a 5G mobile communication system, a next generation NodeB in a 6^{th} generation (6^{th} generation, 6G) mobile communication system, a base station in a future mobile communication system, or the like. Alternatively, the network device may be a module or a unit that completes some functions of a base station, for example, may be a central unit (central unit, CU), a distributed unit (distributed unit, DU), a remote radio unit (remote radio unit, RRU), or a baseband unit (baseband unit, BBU). Alternatively, the (R)AN may be a device or the like that undertakes a base station function in a D2D communication system, a V2X communication system, an M2M communication system, and an IoT communication system. Alternatively, the (R)AN may be a network device in an NTN. In other words, the (R)AN may be deployed on a high-altitude platform or a satellite. The (R)AN may be a macro base station, may be a micro base station or an indoor base station, or may be a relay node, a donor node, or the like.

A specific technology, a device form, and a name used by the (R)AN are not limited in embodiments of this application. For ease of description, the access network device is used as a unified name of the (R)AN below.

### 3. UPF

The UPF is mainly responsible for forwarding and receiving user data in the terminal. For example, the UPF may receive user plane data from the DN, and send the user plane data to the terminal via the access network device. The UPF may further receive user plane data from the terminal via the access network device, and forward the user plane data to the DN. A transmission resource and a scheduling function that are used by the UPF network element to provide a service for the terminal are managed and controlled by the SMF.

### 4. DN

The DN is mainly used as an operator network that provides a data service for the terminal, for example, the internet (Internet), a third-party service network, or an IP multi-media service (IP multi-media service, IMS) network.

### 5. AUSF

3rd generation partnership project (3rd generation partnership project, 3GPP) and non-3GPP access authentication are supported.

### 6. AMF

The AMF is mainly responsible for signaling processing, for example, functions such as access control, mobility management, attachment and detachment, and gateway selection. When providing a service for a session in the terminal, the AMF provides a control plane storage resource for the session, to store a session identifier, an SMF network element identifier associated with the session identifier, and the like.

### 7. SMF

The SMF is mainly responsible for user plane network element selection, user plane network element redirection, internet protocol (internet protocol, IP) address assignment, bearer establishment, modification, and release, quality of service (quality of service, QoS) control, and the like.

### 8. NSSF

The NSSF is mainly responsible for network slice selection, and determines, based on slice selection assistance information, subscription information, and the like of the terminal, a network slice instance that the terminal is allowed to access.

### 9. NEF

The NEF mainly supports secure interaction between a 3GPP network and a third-party application.

### 10. NRF

The NRF is mainly configured to store a network function entity, description information of a service provided by the network function entity, and the like.

### 11. PCF

The PCF is mainly responsible for a policy control decision, provision of a policy rule of a control plane function, a traffic-based charging control function, and the like.

### 12. UDM

The UDM is mainly responsible for subscription data management of the terminal, including storage and management of a terminal identifier, access authorization of the terminal, and the like.

### 13. AF

The AF mainly supports interacting with a 3GPP core network to provide a service, for example, affecting a data routing decision, a policy control function, or providing a third-party service for the network. The AF may be an AF deployed on the operator network, or may be a third-party AF.

In the network architecture shown in FIG. 1, the network elements may communicate with each other through interfaces. The interfaces between the network elements may be point-to-point interfaces, or may be service-based interfaces. This is not limited in this application.

It should be understood that the network architecture shown above is merely an example for description, and a network architecture applicable to embodiments of this application is not limited thereto. Any network architecture that can implement functions of the foregoing network elements is applicable to embodiments of this application.

It should be further understood that the functions or network elements such as the AMF, the SMF, the UPF, the PCF, the UDM, the AUSF, the NSSF, the NEF, the NRF, and the AF shown in FIG. 1 may be understood as network elements configured to implement different functions, and for example, may be combined into a network slice as required. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the network elements are not limited in this application.

It should be further understood that the foregoing names are defined merely for ease of distinguishing between different functions, and shall not constitute any limitation on this application. This application does not exclude a possibility of using another name in a 6G network and another future network. For example, in the 6G network, some or all of the foregoing network elements may still use the terms in 5G, or may use other names.

The technical solutions provided in this application may be applied to a relay scenario in which a remote terminal is connected to a network via a relay terminal.

In an example, FIG. 2 is a diagram of a network architecture in a relay scenario. The network architecture shown in FIG. 2 may be based on the 5G architecture shown in FIG. 1, but is not limited thereto.

As shown in FIG. 2, the network architecture includes a remote terminal, a relay terminal, an access network device, a UPF, and a data network. The remote terminal may also be referred to as remote UE (remote UE), and is a terminal that obtains a relay service, for example, a watch, a band, or an augmented reality (augmented reality, AR) headset/virtual reality (virtual reality, VR) headset. The relay terminal may also be referred to as relay UE (relay UE), and is a terminal that provides the relay service, for example, a smartphone or customer-premises equipment

(customer-premises equipment, CPE). The remote terminal may exchange data with the data network via the relay terminal, the access network device, and the UPF. The remote terminal may communicate with the relay terminal through, for example, a PC5 interface. The relay terminal may communicate with the UPF by using a PDU session of the relay terminal, and the relay terminal may communicate with the access network device through a Uu interface. The UPF may communicate with the data network through, for example, an N6 interface.

It should be noted that embodiments of this application may be applied to the network architecture shown in FIG. 1 or the network architecture shown in FIG. 2, but are not limited thereto.

For ease of understanding the technical solutions in this application, layer-3 relay in this application is first described.

In the 5G system, indirect communication (that is, a communication mode in which the remote terminal accesses the network via the relay terminal) supports a layer-3 relay (layer-3 relay, L3 relay) manner. In the layer-3 relay, the relay terminal establishes the PDU session with the UPF, and forwards uplink and downlink data of the remote terminal based on IP routing.

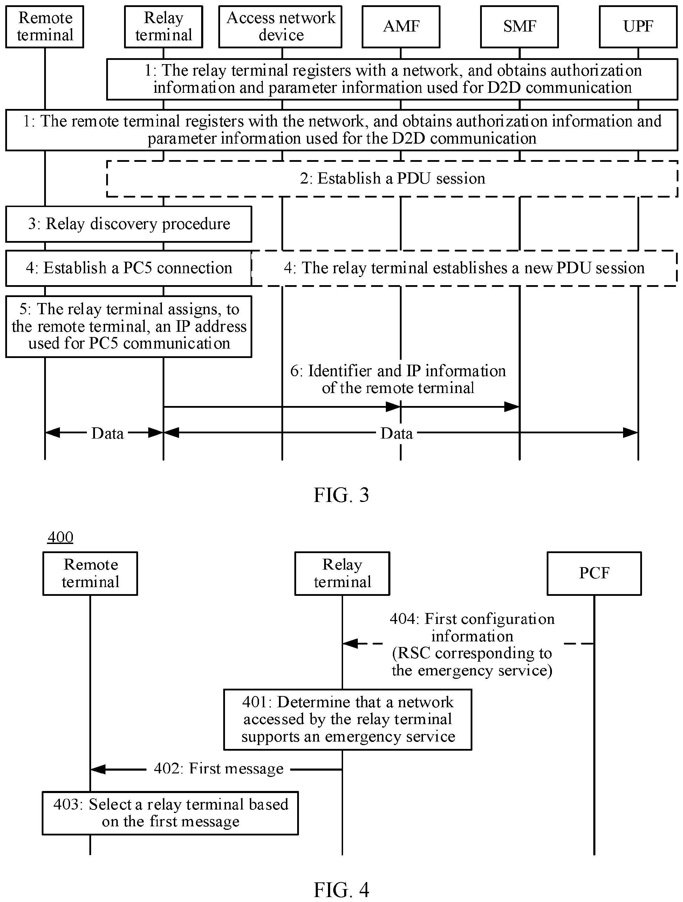

FIG. 3 is a schematic flowchart of connection establishment of layer-3 relay.

In a layer-3 relay scenario, a remote terminal is described as remote UE, and a relay terminal is described as proximity-based services (proximity-based services, ProSe) UE-to-NW relay. For brevity, a description manner of the remote terminal and the relay terminal is still used below.

Step 1: The remote terminal and the relay terminal separately register with a network, and obtain authorization information and parameter information used for D2D communication.

For the remote terminal, the authorization information includes information indicating whether a terminal is authorized to serve as the remote terminal to access the network via the relay terminal. For the relay terminal, the authorization information includes information indicating whether a terminal is authorized to serve as the relay terminal to provide a relay service for the remote terminal.

The parameter information used for the D2D communication includes a QoS mapping configuration, a relay service code (relay service code, RSC), and a PDU session parameter corresponding to each RSC. The RSC identifies a relay connection (for example, a PC5 connection). For the relay terminal, the RSC may identify a connection service provided by the relay terminal for the remote terminal. For the remote terminal, the RSC may identify a connection service that the remote terminal is interested in or expects. The PDU session parameter corresponding to the RSC may include at least one of the following: a PDU session type (PDU session type), a data network name (data network name, DNN), a session and service continuity (session and service continuity, SSC) mode (mode), single network slice selection assistance information (single network slice selection assistance information, S-NSSAI), or an access type preference (access type preference).

Step 2: The relay terminal establishes a PDU session.

After the PDU session is established, an SMF may assign an IP address to the relay terminal, and the relay terminal may perform transmission of data between the relay terminal and a UPF by using the PDU session. The PDU session may be a PDU session dedicated to the relay service.

It should be noted that step 2 is an optional step.

Step 3: The remote terminal and the relay terminal perform a relay discovery procedure.

The remote terminal and the relay terminal may discover each other via the relay discovery procedure. There may be two manners of the relay discovery procedure: a model A (model A) and a model B (model B).

### (1) Relay discovery procedure with the model A

The relay terminal actively sends a discovery message (for example, an announcement message (announcement message)), and the remote terminal listens to and receives the discovery message, where the discovery message includes an RSC of a connection service that can be provided by the relay terminal.

In this way, the remote terminal may perform matching between an RSC of the expected connection service and the RSC in the discovery message, and select a relay terminal whose RSC matches the RSC of the expected connection service.

The RSC of the connection service that can be provided by the relay terminal may be configured by a PCF.

### (2) Relay discovery procedure with the model B

The remote terminal actively sends a discovery message (for example, a solicitation message (solicitation message)), and the relay terminal listens to and receives the discovery message, where the discovery message includes an RSC of the connection service expected by the remote terminal. The relay terminal may perform matching between an RSC of a connection service that can be provided and the RSC in the discovery message. If the RSC of the connection service that can be provided by the relay terminal matches the RSC in the discovery message, the relay terminal responds to the discovery message. In other words, the relay terminal may send a response message to the remote terminal.

In this way, the remote terminal may select a relay terminal from one or more relay terminals that send the response message.

The remote terminal may determine the RSC of the expected connection service based on a correspondence between an application and the RSC. The correspondence may be configured by a PCF. The RSC of the connection service that can be provided by the relay terminal may be configured by the PCF.

Step 4: The remote terminal establishes a PC5 connection to the relay terminal.

PC5 is an interface between terminals, and the PC5 connection is used for communication between the terminals.

Optionally, the relay terminal determines, based on a correspondence between the RSC and the PDU session parameter, whether to establish a new PDU session, in other words, whether the PDU session established by the relay terminal (for example, the PDU session established in step 2) meets a session requirement of the remote terminal. If the PDU session established by the relay terminal does not meet the session requirement of the remote terminal, the relay terminal establishes the new PDU session for the remote terminal. The new PDU session may be dedicated to the relay service, and a session parameter of the new PDU session may be determined by the relay terminal based on the correspondence between the RSC and the PDU session parameter.

Step 5: The relay terminal assigns, to the remote terminal, an IP address used for PC5 communication.

Step 6: The relay terminal reports an identifier and IP information (IP information, IP info) of the remote terminal to an AMF and the SMF.

The IP information includes an address assigned by the relay terminal to the remote terminal for network side communication. For example, if the IP address assigned by the SMF to the relay terminal is IPv4, the IP information is a specific port number (for example, a transmission control protocol (transmission control protocol, TCP)/user datagram protocol (user datagram protocol, UDP) port (port)). This means that the relay terminal performs transmission of data of the remote terminal by using the IPv4 address and the specific port number. For another example, if the IP address assigned by the SMF to the relay terminal is an IPv6 prefix (prefix), the IP information is a longer IPv6 prefix. This means that the relay terminal performs transmission of data of the remote terminal by using the longer IPv6 prefix.

In an implementation, the relay terminal may report the identifier and the IP information of the remote terminal to the AMF and the SMF via a PDU session modification procedure.

Subsequently, the relay terminal may forward uplink and downlink data of the remote terminal based on the IP address.

For example, it is assumed that an IP address used by the remote terminal on the PC5 connection is an IP 3, an IP address corresponding to the PDU session of the relay terminal is an IP 1, and the IP information assigned by the relay terminal to the remote terminal is an IP 1-1. In this way, the remote terminal sends data to a data network by using the IP 3, the data network sends data to the remote terminal by using the IP 1-1, and the relay terminal generates an association relationship between the IP 3 and the IP 1-1. In an uplink direction, after receiving data whose IP address is the IP 3, the relay terminal changes the IP address from the IP 3 to the IP 1-1, sends the data to the UPF by using the PDU session corresponding to the IP 1, and then sends the data to the data network. In a downlink direction, after receiving data whose IP address is the IP 1-1 from the UPF, the relay terminal determines that the data is of the remote terminal, changes the IP address from the IP 1-1 to the IP 3, and sends the data to the remote terminal through the PC5 connection.

For more detailed descriptions of the layer-3 relay, refer to a conventional technology. Details are not described herein again.

In this application, the PC5 connection may also be referred to as a PC5 communication connection, a PC5 link, or a PC5 communication link, and the PC5 connection is uniformly used below.

It should be noted that embodiments of this application may be applied to the foregoing layer-3 relay scenario, or may be applied to another relay scenario, for example, a layer-2 relay scenario. This is not limited. For descriptions of layer-2 relay, refer to the conventional technology. Details are not described herein again.

The following describes in detail communication methods provided in this application with reference to the accompanying drawings.

The technical solutions in this application are applicable to transmission of an abnormal service in a relay scenario. The abnormal service may be understood as a service other than a normal service (normal service). For example, the abnormal service may be an emergency service, a multimedia priority service (multimedia priority service), or a mission critical service (mission critical service). This is not limited. The following describes the technical solutions in this application by using an example in which the abnormal service is the emergency service.

In addition, a "service" in this application may alternatively be replaced with a "service". For example, the emergency service may alternatively be described as an emergency service.

FIG. 4 is a diagram of a communication method 400 according to this application. The method 400 may include at least a part of the following content.

Step 401: A relay terminal determines that a network accessed by the relay terminal supports an emergency service.

The "network" may include an access network and/or a core network. That "a network supports an emergency service" may be understood as that an access network device and/or a core network element support/supports the emergency service. The access network device and/or the core network element herein may be any access network device and/or any core network device, may be any core network element and/or any access network device related to a DN providing the emergency service, or may be a core network element and/or an access network device that are/is related to a DN providing the emergency service and that are/is configured to transmit the emergency service to the relay terminal. This is not limited in this application.

That a network supports an emergency service may be understood as that the network supports transmission of the emergency service, the network supports configuration or control of the emergency service, the network has a capability or a resource for transmission of the emergency service, or the like.

The emergency service may be a general service type, and may be referred to as an emergency service type. The emergency service type may include one or more emergency services. For example, the emergency service type includes an emergency voice service, an emergency video service, and an emergency short message service. In this case, that a network accessed by the relay terminal supports an emergency service may be understood as that the network accessed by the relay terminal supports any emergency service in the emergency service type.

Alternatively, the emergency service may be a specific emergency service, for example, an emergency voice service, an emergency video service, or an emergency short message service. In this case, that a network accessed by the relay terminal supports an emergency service may be understood as that the network accessed by the relay terminal supports a specific emergency service. For example, the network accessed by the relay terminal supports the emergency voice service.

In a possible implementation, before the relay terminal determines that the network accessed by the relay terminal supports the emergency service, the method 400 further includes: The relay terminal determines that a first message includes a relay service code corresponding to the emergency service.

In other words, if the relay service code included in the first message corresponds to the emergency service, the relay terminal may determine whether the network accessed by the relay terminal supports the emergency service. If the relay service code included in the first message does not correspond to the emergency service, the relay terminal may not determine whether the network accessed by the relay terminal supports the emergency service.

In this application, there are many manners in which the relay terminal determines whether the network accessed by the relay terminal supports the emergency service. This is not limited.

In a possible implementation, when at least one of the following cases is met, the relay terminal determines that the network accessed by the relay terminal supports the emergency service: The relay terminal has received an emergency service support indicator (emergency service support indicator) from an AMF or the access network device; the relay terminal has stored an emergency service support indicator; or the relay terminal has established an emergency PDU session.

In another possible implementation, when none of the following cases is met, the relay terminal determines that the network accessed by the relay terminal does not support the emergency service: The relay terminal has received an emergency service support indicator from an AMF or the access network device; the relay terminal has stored an emergency service support indicator; or the relay terminal has established an emergency PDU session.

The emergency service support indicator indicates that the network accessed by the relay terminal supports the emergency service.

The "emergency PDU session" herein may be understood as a PDU session used for the transmission of the emergency service, or may be understood as a PDU session corresponding to an emergency data network name (data network name, DNN).

Optionally, the relay terminal is a layer-3 relay terminal or a layer-2 relay terminal.

Step 402: The relay terminal sends the first message to a remote terminal.

Correspondingly, the remote terminal receives the first message from the relay terminal.

The first message is used for the remote terminal discovering the relay terminal.

In a possible implementation, the first message is a first discovery message, and the first discovery message includes the RSC corresponding to the emergency service. For example, when the remote terminal and the relay terminal use a relay discovery procedure with a model A, the first message is the first discovery message. For descriptions of the relay discovery procedure with the model A, refer to related descriptions in FIG. 3. Details are not described herein again.

In another possible implementation, the first message is a response message, the response message is used to respond to a second discovery message from the remote terminal, and the second discovery message includes the relay service code corresponding to the emergency service. For example, when the remote terminal and the relay terminal use a relay discovery procedure with a model B, the first message is the response message. For descriptions of the relay discovery procedure with the model B, refer to related descriptions in FIG. 3. Details are not described herein again.

The RSC corresponding to the emergency service (RSC for emergency service) may alternatively be described as an RSC for the emergency service, an RSC used for the emergency service, or the like.

Based on different meanings of the emergency service, correspondingly, the RSC corresponding to the emergency service may also have different meanings.

Specifically, when the emergency service is the service type, the RSC corresponding to the emergency service is an RSC corresponding to the emergency service type. In this case, services of the emergency service type correspond to a same RSC. For example, it is assumed that the emergency service type includes the emergency voice service, the emergency video service, and the emergency short message service. In this case, RSCs corresponding to the emergency voice service, the emergency video service, and the emergency short message service are the same.

When the emergency service is the specific emergency service, the RSC corresponding to the emergency service may alternatively be an RSC corresponding to the specific emergency service. In this case, different services of the emergency service type may correspond to a same RSC or different RSCs. For example, it is assumed that the emergency service type includes the emergency voice service, the emergency video service, and the emergency short message service. In this case, the emergency voice service corresponds to an RSC 1, the emergency video service corresponds to an RSC 2, and the emergency short message service corresponds to an RSC 3; or the emergency voice service corresponds to an RSC 1, and the emergency video service and the emergency short message service correspond to an RSC 2. This is not limited.

Optionally, when the relay terminal is in an emergency registration state, the first message includes an emergency registration indicator and/or emergency registration time information. The emergency registration indicator indicates that the relay terminal is in the emergency registration state. The emergency registration time information indicates at least one of time in which the relay terminal is in the emergency registration state, remaining time in which the relay terminal is in the emergency registration state, or time in which the relay terminal has been in the emergency registration state. The time in which the relay terminal is in the emergency registration state may be understood as total time in which the relay terminal may maintain the emergency registration state.

For example, if the total time in which the relay terminal may maintain the emergency registration state is 5s, the remaining time in which the relay terminal is in the emergency registration state is 3s, and the time in which the relay terminal has been in the emergency registration state is 2s, the emergency registration time information may indicate at least one of 5s, 3s, or 2s.

In a registration process, the terminal includes a registration type in a registration request message, and emergency registration is one of registration types. Therefore, that the relay terminal is in the emergency registration state may be understood as that the relay terminal is in an emergency registration process.

Optionally, the method 400 further includes: The relay terminal generates or determines the first message.

Step 403: The remote terminal selects a relay terminal based on the first message.

In a possible implementation, the remote terminal receives one or more first messages, and selects a relay terminal from relay terminals that send the one or more first messages.

Optionally, the one or more first messages received by the remote terminal include a first message from a first relay terminal, and the first message from the first relay terminal includes an emergency registration indicator and/or emergency registration time information. When selecting the relay terminal from the relay terminals that send the one or more first messages, the remote terminal considers that the first message from the first relay terminal includes the emergency registration indicator and/or the emergency registration time information. The emergency registration indicator indicates that the first relay terminal is in an emergency registration state. The emergency registration time information indicates at least one of time in which the first relay terminal is in the emergency registration state, remaining time in which the first relay terminal is in the emergency registration state, or time in which the first relay terminal has been in the emergency registration state.

For example, the remote terminal preferentially selects a relay terminal in a non-emergency registration state.

For another example, if all relay terminals that send the first message are in an emergency registration state, the remote terminal preferentially selects a relay terminal whose remaining time in the emergency registration state is long.

In this application, the first relay terminal may be one relay terminal, or may be a plurality of relay terminals.

It should be noted that a sequence of step 401 and step 402 is not limited in this application.

In a possible implementation, step 401 is performed before step 402. To be specific, after determining that the network accessed by the relay terminal supports the emergency service, the relay terminal sends the first message to the remote terminal.

In an example, if the relay terminal determines that the network accessed by the relay terminal supports the emergency service, the relay terminal sends the first message to the remote terminal. For example, in the relay discovery procedure with the model A, if the relay terminal determines that the network accessed by the relay terminal supports the emergency service, the relay terminal sends the first discovery message to the remote terminal. In addition, if the relay terminal determines that the network accessed by the relay terminal does not support the emergency service, the relay terminal may not send the first discovery message to the remote terminal, or the relay terminal sends the first discovery message to the remote terminal, but the first discovery message does not carry the RSC corresponding to the emergency service.

In another example, if the relay terminal determines that the network accessed by the relay terminal supports the emergency service, and determines that another condition is met (for example, an RSC of a connection service that can be provided by the relay terminal matches an RSC in a discovery message received from the remote terminal), the relay terminal sends the first message to the remote terminal. For example, in the relay discovery procedure with the model B, if the relay terminal determines that the network accessed by the relay terminal supports the emergency service, and the RSC of the connection service that can be provided by the relay terminal matches the RSC in the discovery message received from the remote terminal, the relay terminal sends the response message of the second discovery message to the remote terminal.

In other words, the relay terminal does not participate in the relay discovery procedure of the emergency service when the network accessed by the relay terminal does not support the emergency service, and may participate in the relay discovery procedure of the emergency service (for example, sending the first discovery message to the remote terminal or responding to the second discovery message sent by the remote terminal) only when the network accessed by the relay terminal supports the emergency service.

According to the foregoing technical solution, it can be ensured that a network accessed by a relay terminal participating in the relay discovery procedure of the emergency service supports the emergency service, to ensure that a relay terminal selected by a remote terminal that expects to access the emergency service can provide a relay service for the emergency service. This facilitates the transmission of the emergency service in a relay scenario.

In some other embodiments of this application, the relay terminal may further determine whether the network authorizes the remote terminal to access the emergency service, to avoid access of an unauthorized remote terminal to the emergency service. In this application, "accessing (access) the emergency service" may alternatively be replaced with "using (use) the emergency service", "obtaining (acquire) the emergency service", or the like.

In a possible implementation, in a procedure of establishing a connection to the remote terminal, the relay terminal determines whether the network authorizes the remote terminal to access the emergency service.

In this case, the method 400 further includes: The remote terminal sends a third message to the relay terminal, and correspondingly, the relay terminal receives the third message from the remote terminal, where the third message is used to request to establish a connection to the relay terminal, and the connection is used for the transmission of the emergency service. After receiving the third message, the relay terminal sends a second message to the AMF, and correspondingly, the AMF receives the second message from the relay terminal, where the second message is used to request to authorize the remote terminal to access the emergency service. After receiving the second message, the AMF sends an authorization result to the relay terminal, and correspondingly, the relay terminal receives the authorization result from the AMF. If the authorization result indicates that the remote terminal is successfully authorized to access the emergency service, the relay terminal sends a fifth message to the remote terminal, and correspondingly, the remote terminal receives the fifth message from the relay terminal, where the fifth message includes information indicating that the connection is successfully established. Alternatively, if the authorization result indicates that the remote terminal fails to be authorized to access the emergency service, the relay terminal sends a sixth message to the remote terminal, and correspondingly, the remote terminal receives the sixth message from the relay terminal, where the sixth message includes information indicating that the connection fails to be established. Optionally, the sixth message further includes a cause value, and the cause value is an authorization failure.

Optionally, the connection between the remote terminal and the relay terminal is a direct communication connection, the third message is a direct communication request (direct communication request, DCR) message, the fifth message is a direct communication accept (direct communication accept) message, and the sixth message is a direct communication reject (direct communication reject) message.

Optionally, the second message and a fourth message are authorization request (authorization request) messages, and the authorization result is carried in an authorization response (authorization response) message.

In another possible implementation, in the relay discovery procedure (for example, the relay discovery procedure with the model B), the relay terminal determines whether the network authorizes the remote terminal to access the emergency service. It should be noted that a sequence in which the relay terminal determines whether the network accessed by the relay terminal supports the emergency service and determines whether the network authorizes the remote terminal to access the emergency service is not limited in this application.

In an example, the method 400 further includes: The remote terminal sends the second discovery message to the relay terminal, and correspondingly, the relay terminal receives the second discovery message from the remote terminal, where the second discovery message includes the RSC corresponding to the emergency service. After receiving the second discovery message, the relay terminal sends a second message to the AMF, and correspondingly, the AMF receives the second message from the relay terminal, where the second message is used to request to authorize the remote terminal to access the emergency service. After receiving the second message, the AMF sends an authorization result to the relay terminal, and correspondingly, the relay terminal receives the authorization result from the AMF. Step 401 may specifically include: When the authorization result indicates that the remote terminal is successfully authorized to access the emergency service, the relay terminal performs step 401.

In addition, when the authorization result indicates that the remote terminal fails to be authorized to access the emergency service, the relay terminal may not perform step 401.

In other words, after receiving the second discovery message of the remote terminal, the relay terminal first determines whether the network authorizes the remote terminal to access the emergency service, and further determines, when the network successfully authorizes the remote terminal to access the emergency service, whether the network accessed by the relay terminal supports the emergency service. Subsequently, the relay terminal sends or does not send the response message of the second discovery message depending on whether the network accessed by the relay terminal supports the emergency service. Certainly, when determining whether to send the response message of the second discovery message, the relay terminal may further consider another factor, for example, whether RSCs match.

In another example, the method 400 further includes: The remote terminal sends the second discovery message to the relay terminal, and correspondingly, the relay terminal receives the second discovery message from the remote terminal, where the second discovery message includes the RSC corresponding to the emergency service. After receiving the second discovery message, the relay terminal determines whether the network accessed by the relay terminal supports the emergency service. If the network accessed by the relay terminal supports the emergency service, the relay terminal sends a second message to the AMF, and correspondingly, the AMF receives the second message from the relay terminal, where the second message is used to request to authorize the remote terminal to access the emergency service. After receiving the second message, the AMF sends an authorization result to the relay terminal, and correspondingly, the relay terminal receives the authorization result from the AMF. Step 402 may specifically include: When the authorization result indicates that the remote terminal is successfully authorized to access the emergency service, the relay terminal sends the response message of the second discovery message to the remote terminal. In addition, when the authorization result indicates that the remote terminal fails to be authorized to access the emergency service, the relay terminal may not send the response message of the second discovery message to the remote terminal. Certainly, when determining whether to send the response message of the second discovery message, the relay terminal may further consider another factor, for example, whether RSCs match.

In addition, if the network accessed by the relay terminal does not support the emergency service, the relay terminal may not send the second message to the AMF.

In other words, after receiving the second discovery message of the remote terminal, the relay terminal first determines whether the network accessed by the relay terminal supports the emergency service, and further determines, when the network accessed by the relay terminal supports the emergency service, whether the network authorizes the remote terminal to access the emergency service. Subsequently, the relay terminal sends or does not send the response message of the second discovery message depending on whether the network authorizes the remote terminal to access the emergency service.

In still another example, the method 400 further includes: The remote terminal sends the second discovery message to the relay terminal, and correspondingly, the relay terminal receives the second discovery message from the remote terminal, where the second discovery message includes the RSC corresponding to the emergency service. After receiving the second discovery message, the relay terminal determines whether the network accessed by the relay terminal supports the emergency service, and sends a second message to the AMF, where the second message is used to request to authorize the remote terminal to access the emergency service. After receiving the second message, the AMF sends an authorization result to the relay terminal, and correspondingly, the relay terminal receives the authorization result from the AMF. Step 402 may specifically include: When the network accessed by the relay terminal supports the emergency service, and the authorization result indicates that the remote terminal is successfully authorized to access the emergency service, the relay terminal sends the response message of the second discovery message to the remote terminal. Certainly, when determining whether to send the response message of the second discovery message, the relay terminal may further consider another factor, for example, whether RSCs match.

In addition, when the network accessed by the relay terminal does not support the emergency service, and/or the authorization result indicates that the remote terminal fails to be authorized to access the emergency service, the relay terminal may not send the response message of the second discovery message to the remote terminal.

In other words, after receiving the second discovery message of the remote terminal, the relay terminal determines whether the network accessed by the relay terminal supports the emergency service, and determines whether the network authorizes the remote terminal to access the emergency service. Subsequently, the relay terminal comprehensively considers factors such as whether the network accessed by the relay terminal supports the emergency service and whether the network authorizes the remote terminal to access the emergency service, to send or not send the response message of the second discovery message.

Optionally, the method 400 further includes: The AMF obtains the authorization result before the AMF sends the authorization result to the relay terminal, where the authorization result indicates that the remote terminal is successfully authorized to access the emergency service or fails to be authorized to access the emergency service.

In a possible implementation, the AMF obtains the authorization result from an authorization network element. Specifically, the AMF sends the fourth message to the authorization network element, and correspondingly, the authorization network element receives the fourth message from the AMF, where the fourth message is used to request to authorize the remote terminal to access the emergency service. The authorization network element sends the authorization result to the AMF, and correspondingly, the AMF receives the authorization result from the authorization network element.

A specific type of the authorization network element is not limited in this application. For example, the authorization network element may be a UDM, a PCF, or an AUSF.

Optionally, the method 400 further includes: The remote terminal sends a seventh message to the relay terminal, and correspondingly, the relay terminal receives the seventh message from the remote terminal, where the seventh message is used to request to establish a connection to the relay terminal, and the connection is used for the transmission of the emergency service. After receiving the seventh message, if the relay terminal has no emergency PDU session, the relay terminal requests to establish the emergency PDU session; or if the relay terminal has established the emergency PDU session, the relay terminal may not request to establish the emergency PDU session.

Optionally, the connection between the remote terminal and the relay terminal is a direct communication connection, and the seventh message is a direct communication request message.

It should be noted that the seventh message and the third message may be a same message, or may be different messages. This is not limited.

In some other embodiments of this application, the method 400 may further include: The PCF obtains the relay service code corresponding to the emergency service. The PCF sends first configuration information to the relay terminal, and correspondingly, the relay terminal receives the first configuration information from the PCF, where the first configuration information includes the relay service code corresponding to the emergency service; and/or the PCF sends second configuration information to the remote terminal, and correspondingly, the remote terminal receives the second configuration information from the PCF, where the second configuration information includes the relay service code corresponding to the emergency service. In other words, the PCF configures the relay service code corresponding to the emergency service for the relay terminal and/or the remote terminal. It should be noted that the step herein only indicates that the PCF configures the relay service code corresponding to the emergency service for the relay terminal and the remote terminal. That the PCF configures the relay service code corresponding to the emergency service for the relay terminal and that the PCF configures the relay service code corresponding to the emergency service for the relay terminal and the remote terminal are independent processes. In the configuration process, the PCF does not consider whether a connection is subsequently established between the relay terminal and the remote terminal.

Optionally, that the PCF obtains the relay service code corresponding to the emergency service includes: The PCF obtains the relay service code corresponding to the emergency service locally or from an AF. The local relay service code corresponding to the emergency service in the PCF may be preconfigured or predefined.

When the PCF obtains the RSC corresponding to the emergency service from the AF, it can be ensured that RSCs of different public land mobile networks (public land mobile networks, PLMNs) are consistent. Therefore, an inter-PLMN relay service used for the emergency service can be better supported (to be specific, the relay terminal and the remote terminal access different PLMNs, and the relay terminal provides the relay service of the emergency service for the remote terminal).

Optionally, the first configuration information further includes a priority of the relay service code corresponding to the emergency service. In this case, the method 400 further includes: The relay terminal maintains or releases the connection between the relay terminal and the remote terminal based on the priority of the relay service code corresponding to the emergency service, where the connection is used for the transmission of the emergency service. That the connection is used for the transmission of the emergency service may be understood as that an RSC included in a context of the connection corresponds to the emergency service. The connection may be understood as a PC5 connection.

For example, the PCF configures, for the relay terminal by using the first configuration information, a plurality of RSCs including the RSC corresponding to the emergency service, and a priority of each of the plurality of RSCs. The relay terminal establishes a plurality of connections to the remote terminal, and the plurality of connections are in one-to-one correspondence with the plurality of RSCs (for example, a connection 1 corresponds to an RSC 1 (a context of the connection 1 includes the RSC 1), and a connection 2 corresponds to an RSC 2 (a context of the connection 2 includes the RSC 2)). When the relay terminal releases a part of the established connections, for example, when a transmission resource or a capability of the relay terminal is limited, the relay terminal may release a connection with a low priority of an RSC from the plurality of established connections.

Optionally, the second configuration information further includes the priority of the relay service code corresponding to the emergency service. In this case, the method 400 further includes: The remote terminal maintains or releases the connection between the relay terminal and the remote terminal based on the priority of the relay service code corresponding to the emergency service, where the connection is used for the transmission of the emergency service. That the connection is used for the transmission of the emergency service may be understood as that an RSC included in a context of the connection corresponds to the emergency service. The connection may be understood as a PC5 connection.

For example, the PCF configures, for the remote terminal by using the second configuration information, a plurality of RSCs including the RSC corresponding to the emergency service, and a priority of each of the plurality of RSCs. The remote terminal establishes a plurality of connections to the relay terminal, and the plurality of connections are in one-to-one correspondence with the plurality of RSCs (for example, a connection 1 corresponds to an RSC 1 (a context of the connection 1 includes the RSC 1), and a connection 2 corresponds to an RSC 2 (a context of the connection 2 includes the RSC 2)). When the remote terminal releases a part of the established connections, for example, when a transmission resource or a capability of the remote terminal is limited, the remote terminal may release a connection with a low priority of an RSC from the plurality of established connections.

In some other embodiments of this application, the method 400 further includes: The relay terminal sends first information to the AMF, and correspondingly, the AMF receives the first information from the relay terminal, where the first information indicates that the relay service of the relay terminal is used for the emergency service (relay service for emergency service), or the first information indicates that the relay terminal provides the emergency service for the remote terminal. In other words, the relay terminal reports, to the AMF, that the relay terminal is in a state of providing the relay service for the emergency service or a state in which the relay terminal provides the emergency service for the remote terminal, so that the AMF does not limit the relay terminal in terms of access management or mobility management. For example, the relay terminal may provide the relay service for the emergency service in a non-allowed (non-allowed) area. Similarly, the emergency service herein may be a general service type, or may be a specific emergency service.

Optionally, after the AMF receives the first information, the AMF stores the first information in a context of the relay terminal.

Optionally, the first information may be carried in a service request (service request) message, a PDU session establishment (PDU session establishment) message, or a registration (registration) message.

Optionally, when the PDU session establishment message carries the first information, the first information indicates that a PDU session is used for the transmission of the emergency service. In this case, the AMF selects, based on the first information, an SMF that can provide the emergency service, or the AMF sends the first information to an SMF. When the AMF sends the first information to the SMF, the SMF learns, based on the first information, that the PDU session is used for the transmission of the emergency service, and then selects a UPF that can provide the emergency service.

In some other embodiments of this application, the method 400 further includes: The relay terminal sends second information to the AMF, and correspondingly, the AMF receives the second information from the relay terminal, where the second information indicates that providing, by the relay terminal, the emergency service for the remote terminal is canceled, or the second information indicates that the relay terminal does not provide the emergency service for the remote terminal. In other words, the relay terminal reports, to the AMF, that the relay terminal is not in the state of providing the relay service for the emergency service or is in a state in which the relay terminal does not provide the emergency service for the remote terminal, so that the AMF limits the relay terminal in terms of the access management or the mobility management.

Optionally, after the AMF receives the second information, the AMF deletes the first information from the context of the relay terminal.

Optionally, after the relay terminal releases the connection used for the transmission of the emergency service, the relay terminal sends the second information to the AMF. Alternatively, if the relay terminal no longer has the connection used for the transmission of the emergency service, the relay terminal sends the second information to the AMF.

It should be noted that, that "a network accessed by the relay terminal supports an emergency service" in the method 400 may alternatively be replaced with that "the network supports the emergency service".

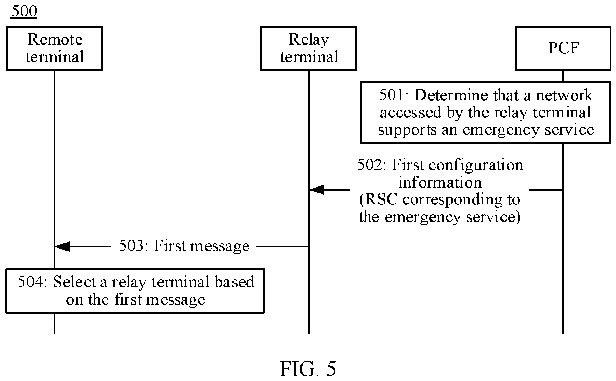

In the method 400, the relay terminal determines whether the network accessed by the relay terminal supports the emergency service. In some other embodiments of this application, the PCF may alternatively determine whether the network accessed by the relay terminal supports the emergency service, and provide the RSC corresponding to the emergency service for the relay terminal when the network accessed by the relay terminal supports the emergency service. The following provides detailed descriptions with reference to FIG. 5.

FIG. 5 is a diagram of a communication method 500 according to this application. The method 500 may include at least a part of the following content.

Step 501: A PCF determines that a network accessed by a relay terminal supports an emergency service.

For descriptions that "a network supports an emergency service" and descriptions of the "emergency service", refer to step 401. Details are not described herein again.

In this application, there are many manners in which the PCF determines whether the network accessed by the relay terminal supports the emergency service. This is not limited.

In a possible implementation, when at least one of the following cases is met, the PCF determines that the network accessed by the relay terminal supports the emergency service: The PCF has received an emergency service support indicator from an AMF, or the PCF has stored or preconfigured an emergency service support indicator. In another possible implementation, when neither of the following cases is met, the PCF determines that the network accessed by the relay terminal does not support the emergency service: The PCF has received an emergency service support indicator from an AMF, or the PCF has stored or preconfigured an emergency service support indicator.

The emergency service support indicator indicates that the network accessed by the relay terminal supports the emergency service.

Optionally, the emergency service support indicator stored or preconfigured in the PCF is network capability information.

Optionally, the network capability information is from an operation administration and maintenance (operation administration and maintenance, OAM) network element.

Step 502: When the network accessed by the relay terminal supports the emergency service, the PCF sends first configuration information to the relay terminal.

Correspondingly, the relay terminal receives the first configuration information from the PCF.

The first configuration information includes an RSC corresponding to the emergency service.

For descriptions of "the RSC corresponding to the emergency service", refer to step 402. Details are not described herein again.

Optionally, the method 500 further includes: The PCF obtains the relay service code corresponding to the emergency service. In a possible implementation, that the PCF obtains the relay service code corresponding to the emergency service includes: The PCF obtains the relay service code corresponding to the emergency service locally or from an AF. The local relay service code corresponding to the emergency service in the PCF may be preconfigured or predefined.

When the PCF obtains the RSC corresponding to the emergency service from the AF, it can be ensured that RSCs of different PLMNs are consistent. Therefore, an inter-PLMN relay service used for the emergency service can be better supported (to be specific, the relay terminal and a remote terminal access different PLMNs, and the relay terminal provides the relay service of the emergency service for the remote terminal).

In other words, the PCF configures the relay service code corresponding to the emergency service for the relay terminal only when the network accessed by the relay terminal supports the emergency service, so that the relay terminal participates in a relay discovery procedure of the emergency service.

Step 503: The relay terminal sends a first message to the remote terminal.

Correspondingly, the remote terminal receives the first message from the relay terminal.

The first message is used for the remote terminal discovering the relay terminal.

In a possible implementation, the first message is a first discovery message, and the first discovery message includes the RSC corresponding to the emergency service. For example, when the remote terminal and the relay terminal use a relay discovery procedure with a model A, the first message is the first discovery message. For descriptions of the relay discovery procedure with the model A, refer to related descriptions in FIG. 3. Details are not described herein again.

In another possible implementation, the first message is a response message, the response message is used to respond to a second discovery message from the remote terminal, and the second discovery message includes the relay service code corresponding to the emergency service. For example, when the remote terminal and the relay terminal use a relay discovery procedure with a model B, the first message is the response message. For descriptions of the relay discovery procedure with the model B, refer to related descriptions in FIG. 3. Details are not described herein again.

Optionally, when the relay terminal is in an emergency registration state, the first message includes an emergency registration indicator and/or emergency registration time information. The emergency registration indicator indicates that the relay terminal is in the emergency registration state. The emergency registration time information indicates at least one of time in which the relay terminal is in the emergency registration state, remaining time in which the relay terminal is in the emergency registration state, or time in which the relay terminal has been in the emergency registration state. The time in which the relay terminal is in the emergency registration state may be understood as total time in which the relay terminal may maintain the emergency registration state.

For example, if the total time in which the relay terminal may maintain the emergency registration state is 5s, the remaining time in which the relay terminal is in the emergency registration state is 3s, and the time in which the relay terminal has been in the emergency registration state is 2s, the emergency registration time information may indicate at least one of 5s, 3s, or 2s.

In a registration process, the terminal includes a registration type in a registration request message, and emergency registration is one of registration types. Therefore, that the relay terminal is in the emergency registration state may be understood as that the relay terminal is in an emergency registration process.

Optionally, the method 500 further includes: The relay terminal generates or determines the first message.

Step 504: The remote terminal selects a relay terminal based on the first message.

An implementation of step 504 is the same as that of step 403. Reference may be made to the descriptions of step 403. Details are not described herein again.

According to the foregoing technical solution, it can be ensured that a network accessed by a relay terminal participating in the relay discovery procedure of the emergency service supports the emergency service, to ensure that a relay terminal selected by a remote terminal that expects to access the emergency service can provide a relay service for the emergency service. This facilitates transmission of the emergency service in a relay scenario.

In some other embodiments of this application, the relay terminal may further determine whether the network authorizes the remote terminal to access the emergency service, to avoid access of an unauthorized remote terminal to the emergency service.

In a possible implementation, in a procedure of establishing a connection to the remote terminal, the relay terminal determines whether the network authorizes the remote terminal to access the emergency service.

In this case, the method 500 further includes: The remote terminal sends a third message to the relay terminal, and correspondingly, the relay terminal receives the third message from the remote terminal, where the third message is used to request to establish a connection to the relay terminal, and the connection is used for the transmission of the emergency service. After receiving the third message, the relay terminal sends a second message to the AMF, and correspondingly, the AMF receives the second message from the relay terminal, where the second message is used to request to authorize the remote terminal to access the emergency service. After receiving the second message, the AMF sends an authorization result to the relay terminal, and correspondingly, the relay terminal receives the authorization result from the AMF. If the authorization result indicates that the remote terminal is successfully authorized to access the emergency service, the relay terminal sends a fifth message to the remote terminal, and correspondingly, the remote terminal receives the fifth message from the relay terminal, where the fifth message includes information indicating that the connection is successfully established. Alternatively, if the authorization result indicates that the remote terminal fails to be authorized to access the emergency service, the relay terminal sends a sixth message to the remote terminal, and correspondingly, the remote terminal receives the sixth message from the relay terminal, where the sixth message includes information indicating that the connection fails to be established. Optionally, the sixth message further includes a cause value, and the cause value is an authorization failure.

Optionally, the connection between the remote terminal and the relay terminal is a direct communication connection, the third message is a direct communication request message, the fifth message is a direct communication accept message, and the sixth message is a direct communication reject message.

Optionally, the second message and a fourth message are authorization request messages, and the authorization result is carried in an authorization response message.

In another possible implementation, in the relay discovery procedure (for example, the relay discovery procedure with the model B), the relay terminal determines whether the network authorizes the remote terminal to access the emergency service.

In this case, the method 500 further includes: The remote terminal sends the second discovery message to the relay terminal, and correspondingly, the relay terminal receives the second discovery message from the remote terminal, where the second discovery message includes the RSC corresponding to the emergency service. After receiving the second discovery message, the relay terminal sends a second message to the AMF, and correspondingly, the AMF receives the second message from the relay terminal, where the second message is used to request to authorize the remote terminal to access the emergency service. After receiving the second message, the AMF sends an authorization result to the relay terminal, and correspondingly, the relay terminal receives the authorization result from the AMF. Step 503 may specifically include: When the authorization result indicates that the remote terminal is successfully authorized to access the emergency service, the relay terminal sends the response message of the second discovery message to the remote terminal. Certainly, when determining whether to send the response message of the second discovery message, the relay terminal may further consider another factor, for example, whether RSCs match.

In addition, when the authorization result indicates that the remote terminal fails to be authorized to access the emergency service, the relay terminal may not send the response message of the second discovery message to the remote terminal.

Optionally, the method 500 further includes: The AMF obtains the authorization result before the AMF sends the authorization result to the relay terminal, where the authorization result indicates that the remote terminal is successfully authorized to access the emergency service or fails to be authorized to access the emergency service.

In a possible implementation, the AMF obtains the authorization result from an authorization network element. Specifically, the AMF sends the fourth message to the authorization network element, and correspondingly, the authorization network element receives the fourth message from the AMF, where the fourth message is used to request to authorize the remote terminal to access the emergency service. The authorization network element sends the authorization result to the AMF, and correspondingly, the AMF receives the authorization result from the authorization network element.

A specific type of the authorization network element is not limited in this application. For example, the authorization network element may be a UDM, the PCF, or an AUSF.

Optionally, the method 500 further includes: The remote terminal sends a seventh message to the relay terminal, and correspondingly, the relay terminal receives the seventh message from the remote terminal, where the seventh message is used to request to establish a connection to the relay terminal, and the connection is used for the transmission of the emergency service. After receiving the seventh message, if the relay terminal has no emergency PDU session, the relay terminal requests to establish the emergency PDU session; or if the relay terminal has established an emergency PDU session, the relay terminal may not request to establish the emergency PDU session.

Optionally, the connection between the remote terminal and the relay terminal is a direct communication connection, and the seventh message is a direct communication request message.

It should be noted that the seventh message and the third message may be a same message, or may be different messages. This is not limited.

In some other embodiments of this application, the first configuration information further includes a priority of the relay service code corresponding to the emergency service. In this case, the method 500 further includes: The relay terminal maintains or releases the connection between the relay terminal and the remote terminal based on the priority of the relay service code corresponding to the emergency service, where the connection is used for the transmission of the emergency service. That the connection is used for the transmission of the emergency service may be understood as that an RSC included in a context of the connection corresponds to the emergency service. The connection may be understood as a PC5 connection.

For example, the PCF configures, for the relay terminal by using the first configuration information, a plurality of RSCs including the RSC corresponding to the emergency service, and a priority of each of the plurality of RSCs. The relay terminal establishes a plurality of connections to the remote terminal, and the plurality of connections are in one-to-one correspondence with the plurality of RSCs (for example, a connection 1 corresponds to an RSC 1 (a context of the connection 1 includes the RSC 1), and a connection 2 corresponds to an RSC 2 (a context of the connection 2 includes the RSC 2)). When the relay terminal releases a part of the established connections, for example, when a transmission resource or a capability of the relay terminal is limited, the relay terminal may release a connection with a low priority of an RSC from the plurality of established connections.

In some other embodiments of this application, the method 500 further includes: The PCF sends second configuration information to the remote terminal, and correspondingly, the remote terminal receives the second configuration information from the PCF, where the second configuration information includes the relay service code corresponding to the emergency service.

Optionally, the second configuration information further includes the priority of the relay service code corresponding to the emergency service. In this case, the method 500 further includes: The remote terminal maintains or releases the connection between the relay terminal and the remote terminal based on the priority of the relay service code corresponding to the emergency service, where the connection is used for the transmission of the emergency service. That the connection is used for the transmission of the emergency service may be understood as that an RSC included in a context of the connection corresponds to the emergency service. The connection may be understood as a PC5 connection.

For example, the PCF configures, for the remote terminal by using the second configuration information, a plurality of RSCs including the RSC corresponding to the emergency service, and a priority of each of the plurality of RSCs. The remote terminal establishes a plurality of connections to the relay terminal, and the plurality of connections are in one-to-one correspondence with the plurality of RSCs (for example, a connection 1 corresponds to an RSC 1 (a context of the connection 1 includes the RSC 1), and a connection 2 corresponds to an RSC 2 (a context of the connection 2 includes the RSC 2)). When the remote terminal releases a part of the established connections, for example, when a transmission resource or a capability of the remote terminal is limited, the remote terminal may release a connection with a low priority of an RSC from the plurality of established connections.

In some other embodiments of this application, the method 500 further includes: The relay terminal sends first information to the AMF, and correspondingly, the AMF receives the first information from the relay terminal, where the first information indicates that the relay service of the relay terminal is used for the emergency service, or the first information indicates that the relay terminal provides the emergency service for the remote terminal. In other words, the relay terminal reports, to the AMF, that the relay terminal is in a state of providing the relay service for the emergency service or a state in which the relay terminal provides the emergency service for the remote terminal, so that the AMF does not limit the relay terminal in terms of access management or mobility management. For example, the relay terminal may provide the relay service for the emergency service in a non-allowed area. The emergency service herein may be a general service type, or may be a specific emergency service.

Optionally, after the AMF receives the first information, the AMF stores the first information in a context of the relay terminal.

Optionally, the first information may be carried in a service request (service request) message, a PDU session establishment (PDU session establishment) message, or a registration (registration) message.

Optionally, when the PDU session establishment message carries the first information, the first information indicates that a PDU session is used for the transmission of the emergency service. In this case, the AMF selects, based on the first information, an SMF that can provide the emergency service, or the AMF sends the first information to an SMF. When the AMF sends the first information to the SMF, the SMF learns, based on the first information, that the PDU session is used for the transmission of the emergency service, and then selects a UPF that can provide the emergency service.

In some other embodiments of this application, the method 500 further includes: The relay terminal sends second information to the AMF, and correspondingly, the AMF receives the second information from the relay terminal, where the second information indicates that providing, by the relay terminal, the emergency service for the remote terminal is canceled, or the second information indicates that the relay terminal does not provide the emergency service for the remote terminal. In other words, the relay terminal reports, to the AMF, that the relay terminal is not in the state of providing the relay service for the emergency service or is in a state in which the relay terminal does not provide the emergency service for the remote terminal, so that the AMF limits the relay terminal in terms of the access management or the mobility management.

Optionally, after the AMF receives the second information, the AMF deletes the first information from the context of the relay terminal.

Optionally, after the relay terminal releases the connection used for the transmission of the emergency service, the relay terminal sends the second information to the AMF. Alternatively, if the relay terminal no longer has the connection used for the transmission of the emergency service, the relay terminal sends the second information to the AMF.

It should be noted that, that "a network accessed by a relay terminal supports an emergency service" in the method 500 may alternatively be replaced with that "the network supports the emergency service".

The following describes the technical solutions in this application with reference to specific examples.

### Example 1

In the example 1, a relay terminal determines, based on that a network accessed by the relay terminal supports an emergency service, to participate in a relay discovery procedure of the emergency service.

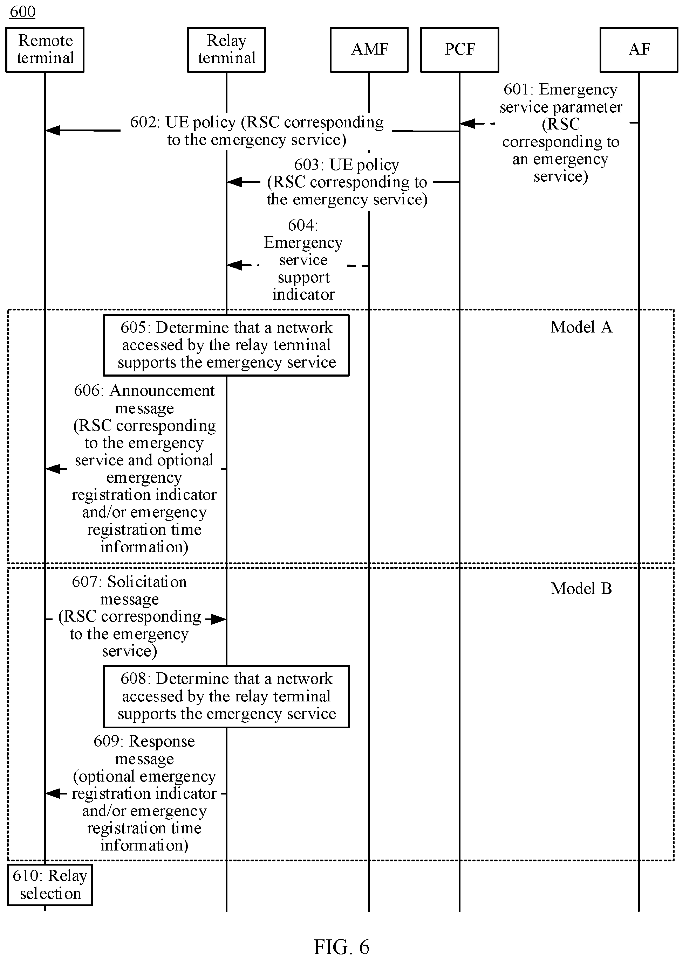

FIG. 6 is a diagram of a communication method 600 according to this application.

Step 601: An AF provides an emergency service parameter for a PCF.

The emergency service parameter includes an RSC corresponding to an emergency service.

In a possible implementation, the AF provides the emergency service parameter for the PCF via a NEF.

The AF provides the emergency service parameter for the PCF, to ensure that RSCs of different PLMNs are consistent. Therefore, an inter-PLMN relay service used for the emergency service can be better supported.

It should be noted that step 601 is an optional step, and the PCF may alternatively obtain the RSC corresponding to the emergency service in another manner. For example, the RSC corresponding to the emergency service in the PCF may be predefined or preconfigured.

Step 602: The PCF provides the RSC corresponding to the emergency service for a remote terminal.

Optionally, the PCF further provides priorities of different RSCs for the remote terminal, so that the remote terminal preferentially releases a PC5 connection corresponding to an RSC with a low priority when a resource is limited.

The PC5 connection corresponding to the RSC may alternatively be understood as a PC5 connection identified by the RSC.

The "different RSCs" herein are RSCs provided by the PCF for the remote terminal, and may include an RSC corresponding to a normal service and/or the RSC corresponding to the emergency service.

In a possible implementation, as shown in FIG. 6, when providing a UE policy (UE policy) for the remote terminal, the PCF provides the RSC corresponding to the emergency service for the remote terminal, where the RSC corresponding to the emergency service is carried in a UE policy container (UE policy container).

Step 603: The PCF provides the RSC corresponding to the emergency service for a relay terminal.

Optionally, the PCF further provides priorities of different RSCs for the relay terminal, so that the relay terminal preferentially releases a PC5 connection corresponding to an RSC with a low priority when a resource is limited.

The "different RSCs" herein are RSCs provided by the PCF for the relay terminal, and may include the RSC corresponding to the normal service and/or the RSC corresponding to the emergency service.

In a possible implementation, as shown in FIG. 6, when providing a UE policy for the relay terminal, the PCF provides the RSC corresponding to the emergency service for the relay terminal, where the RSC corresponding to the emergency service is carried in a UE policy container (UE policy container).

Step 604: A network notifies the relay terminal that the network supports the emergency service.

In a possible implementation, an AMF sends an emergency service support indicator to the relay terminal. The emergency service support indicator indicates that the network accessed by the relay terminal supports the emergency service. In an example, the AMF sends the emergency service support indicator to the relay terminal in a registration process of the relay terminal. For example, the AMF includes the emergency service support indicator in a registration accept message (registration accept message).

In a possible implementation, a RAN device sends an emergency service support indicator to the relay terminal. The emergency service support indicator indicates that the network accessed by the relay terminal supports the emergency service. In an example, the access network device sends the emergency service support indicator to the relay terminal in a network access process of the relay terminal. For example, the access network device includes the emergency service support indicator in an RRC configuration message (radio resource control configuration message). In another example, the access network device sends the emergency service support indicator in a broadcast message, and the relay terminal receives the emergency service support indicator included in the broadcast message.

In this way, if the relay terminal has received the emergency service support indicator, it means that the relay terminal can establish an emergency PDU session to obtain the emergency service. The "emergency PDU session" herein may be understood as a PDU session used for transmission of the emergency service, or may be understood as a PDU session corresponding to an emergency DNN.

It should be noted that step 603 and step 604 may be two independent steps, or may be performed together. For example, when the PCF provides the RSC corresponding to the emergency service for the relay terminal via the AMF in the registration process of the relay terminal, the AMF may provide both the RSC corresponding to the emergency service and the emergency service support indicator for the relay terminal.

Then, the remote terminal and the relay terminal may perform a relay discovery procedure. In the method 600, there may also be two manners of the relay discovery procedure: a model A and a model B. If the relay discovery procedure with the model A is used, the following steps 605 and 606 are performed. If the relay discovery procedure with the model B is used, the following steps 607 to 609 are performed.

Step 605: The relay terminal determines that the network accessed by the relay terminal supports the emergency service.

In a possible implementation, when the emergency service support indicator has been received, the emergency service support indicator is locally stored, or the emergency PDU session has been established, the relay terminal determines that the network accessed by the relay terminal supports the emergency service.

Step 606: The relay terminal actively sends a discovery message (for example, an announcement message (announcement message)).

Correspondingly, the remote terminal listens to and receives the discovery message.

The discovery message carries the RSC corresponding to the emergency service. The discovery message may correspond to the foregoing first discovery message.

Optionally, if the relay terminal is in an emergency registration (emergency registration) state, the discovery message further carries an emergency registration indicator and/or emergency registration time information, for the remote terminal to perform relay selection. Certainly, if the relay terminal is in a non-emergency registration state, the discovery message does not carry an emergency registration indicator and/or emergency registration time information.

The emergency registration indicator indicates that the relay terminal is in the emergency registration state. In the registration process, the terminal includes a registration type in a registration request message, and emergency registration is one of registration types. Therefore, that the relay terminal is in the emergency registration state may be understood as that the relay terminal is in an emergency registration process.

The emergency registration time information indicates at least one of time in which the relay terminal is in the emergency registration state, remaining time (left time) in which the relay terminal is in the emergency registration state, or time in which the relay terminal has been in the emergency registration state. When the relay terminal performs the emergency registration, the AMF assigns a periodic registration update timer (periodic registration update timer) to the relay terminal. The periodic registration update timer is a maximum value of the remaining time. After the periodic registration update timer expires, the relay terminal enters a deregistered state (deregistered state).

Step 607: If the remote terminal obtains the emergency service, the remote terminal actively sends a discovery message (for example, a solicitation message (solicitation message)).

Correspondingly, the relay terminal listens to and receives the discovery message.

The discovery message carries the RSC corresponding to the emergency service. The discovery message may correspond to the foregoing second discovery message.

Step 608: The relay terminal determines that the accessed network supports the emergency service.

In a possible implementation, when the emergency service support indicator has been received, the emergency service support indicator is locally stored, or the emergency PDU session has been established, the relay terminal determines that the network accessed by the relay terminal supports the emergency service.

It should be noted that a sequence of step 607 and step 608 is not limited in this application.

Step 609: If the network accessed by the relay terminal supports the emergency service, and the RSC of the relay terminal matches the RSC in the discovery message, the relay terminal sends a response message to the remote terminal.

Correspondingly, the remote terminal receives the response message from the relay terminal.

The response message herein may correspond to the foregoing response message.

Optionally, if the relay terminal is in an emergency registration state, the response message further carries an emergency registration indicator and/or emergency registration time information, for the remote terminal to perform relay selection. Certainly, if the relay terminal is in a non-emergency registration state, the response message does not carry an emergency registration indicator and/or emergency registration time information. For descriptions of the emergency registration indicator and the emergency registration time information, refer to step 606. Details are not described herein again.

Step 610: The remote terminal performs the relay selection.

Specifically, the remote terminal may perform matching between an expected RSC and the RSC in the discovery message, to select, from one or more relay terminals that send the discovery message, a relay terminal whose RSC matches the expected RSC; or the remote terminal may select a relay terminal from one or more relay terminals that send the response message.

Optionally, the remote terminal further selects the relay terminal based on the emergency registration indicator and/or the emergency registration time information carried in the discovery message or the response message. For example, the remote terminal preferentially selects the relay terminal in the non-emergency registration state. For another example, if all relay terminals that send a discovery message or a response message are in an emergency registration state, the remote terminal preferentially selects a relay terminal whose remaining time in the emergency registration state is long.

In the example 1, that the relay terminal participates in the relay discovery procedure of the emergency service when the network accessed by the relay terminal supports the emergency service includes: sending, in the discovery message, the RSC corresponding to the emergency service, or responding to the discovery message carrying the RSC corresponding to the emergency service. This helps avoid a case in which the relay terminal discovered by the remote terminal does not support the emergency service.

### Example 2

In the example 2, a PCF determines, based on that a network accessed by a relay terminal supports an emergency service, to provide an RSC corresponding to the emergency service for the relay terminal, so that the relay terminal participates in a relay discovery procedure in which the emergency service is supported.

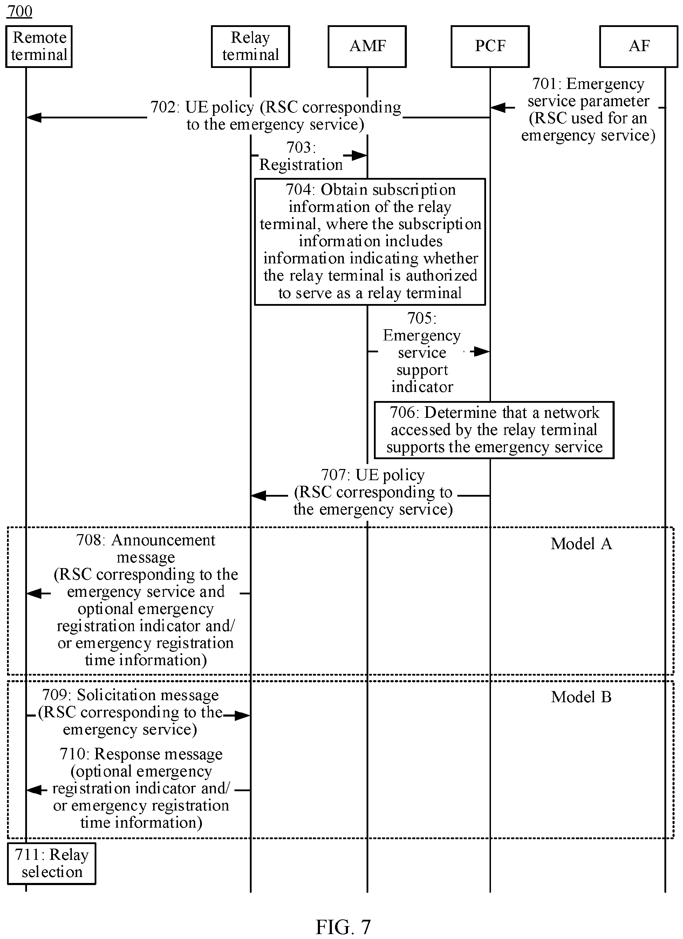

FIG. 7 is a diagram of a communication method 700 according to this application.

Step 701: An AF provides an emergency service parameter for a PCF.

The emergency service parameter includes an RSC corresponding to an emergency service.

Step 702: The PCF provides the RSC corresponding to the emergency service for a remote terminal.

Implementations of steps 701 and 702 are the same as those of steps 601 and 602. Reference may be made to the descriptions of steps 601 and 602. Details are not described herein again.

Step 703: A relay terminal registers with a network.

Specifically, the relay terminal sends a registration request message to an AMF. Correspondingly, the AMF receives the registration request message from the relay terminal.

Step 704: After receiving the registration request message, the AMF obtains subscription information of the relay terminal from a UDM.

The subscription information includes information indicating whether the relay terminal is authorized to serve as a relay terminal.

Step 705: If the relay terminal is authorized to serve as the relay terminal, the AMF sends an emergency service support indicator to the PCF.

The emergency service support indicator indicates that the network accessed by the relay terminal supports the emergency service.

In a possible implementation, the AMF sends the emergency service support indicator to the PCF in an access management policy association (access management policy association, AM policy association) process.

It should be noted that step 705 is an optional step.

Step 706: The PCF determines that the network accessed by the relay terminal supports the emergency service.

In a possible implementation, the PCF determines, based on the emergency service support indicator in step 705, that the network accessed by the relay terminal supports the emergency service.

In another possible implementation, the PCF determines, based on locally preconfigured network capability information, that the network accessed by the relay terminal supports the emergency service, where the network capability information indicates that the network accessed by the relay terminal supports the emergency service.

Step 707: If the network accessed by the relay terminal supports the emergency service, the PCF provides the RSC corresponding to the emergency service for the relay terminal.

Optionally, the PCF further provides priorities of different RSCs for the relay terminal, so that the relay terminal preferentially releases a PC5 connection corresponding to an RSC with a low priority when a resource is limited.

The "different RSCs" herein are RSCs provided by the PCF for the relay terminal, and may include an RSC corresponding to a normal service and/or the RSC corresponding to the emergency service.

In a possible implementation, as shown in FIG. 7, when providing a UE policy for the relay terminal, the PCF provides the RSC corresponding to the emergency service for the relay terminal, where the RSC corresponding to the emergency service is carried in a UE policy container.

Then, the remote terminal and the relay terminal may perform a relay discovery procedure. In the method 700, there may also be two manners of the relay discovery procedure: a model A and a model B. If the relay discovery procedure with the model A is used, the following step 708 is performed. If the relay discovery procedure with the model B is used, the following steps 709 and 710 are performed.

Step 708: The relay terminal actively sends a discovery message (for example, an announcement message (announcement message)).

Correspondingly, the remote terminal listens to and receives the discovery message.

The discovery message carries the RSC corresponding to the emergency service. The discovery message may correspond to the foregoing first discovery message.

Optionally, if the relay terminal is in an emergency registration state, the discovery message further carries an emergency registration indicator and/or emergency registration time information, for the remote terminal to perform relay selection. Certainly, if the relay terminal is in a non-emergency registration state, the discovery message does not carry an emergency registration indicator and/or emergency registration time information.

The emergency registration indicator indicates that the relay terminal is in the emergency registration state.

The emergency registration time information indicates at least one of time in which the relay terminal is in the emergency registration state, remaining time (left time) in which the relay terminal is in the emergency registration state, or time in which the relay terminal has been in the emergency registration state. When the relay terminal performs emergency registration, the AMF assigns a periodic registration update timer to the relay terminal. The periodic registration update timer is a maximum value of the remaining time. After the periodic registration update timer expires, the relay terminal enters a deregistered state.

Step 709: If the remote terminal obtains the emergency service, the remote terminal actively sends a discovery message (for example, a solicitation message (solicitation message)).

Correspondingly, the relay terminal listens to and receives the discovery message.

The discovery message carries the RSC corresponding to the emergency service. The discovery message may correspond to the foregoing second discovery message.

Step 710: If the RSC of the relay terminal matches the RSC in the discovery message, the relay terminal sends a response message to the remote terminal.

Correspondingly, the remote terminal receives the response message from the relay terminal.

Optionally, if the relay terminal is in an emergency registration state, the response message further carries an emergency registration indicator and/or emergency registration time information, for the remote terminal to perform relay selection. Certainly, if the relay terminal is in a non-emergency registration state, the response message does not carry an emergency registration indicator and/or emergency registration time information. For descriptions of the emergency registration indicator and the emergency registration time information, refer to step 708. Details are not described herein again.

Step 711: The remote terminal performs the relay selection.

An implementation of step 711 is the same as that of step 610. Reference may be made to the descriptions of step 610. Details are not described herein again.

In the example 2, when the network accessed by the relay terminal supports the emergency service, the PCF determines to provide the RSC corresponding to the emergency service for the relay terminal. When the network accessed by the relay terminal does not support the emergency service, the PCF does not provide the RSC corresponding to the emergency service for the relay terminal. Therefore, the relay terminal does not participate in the relay discovery procedure in which the emergency service is supported. This helps avoid a case in which the relay terminal discovered by the remote terminal does not support the emergency service. In addition, determining logic of the relay terminal can be simplified according to the method shown in the example 2.

### Example 3

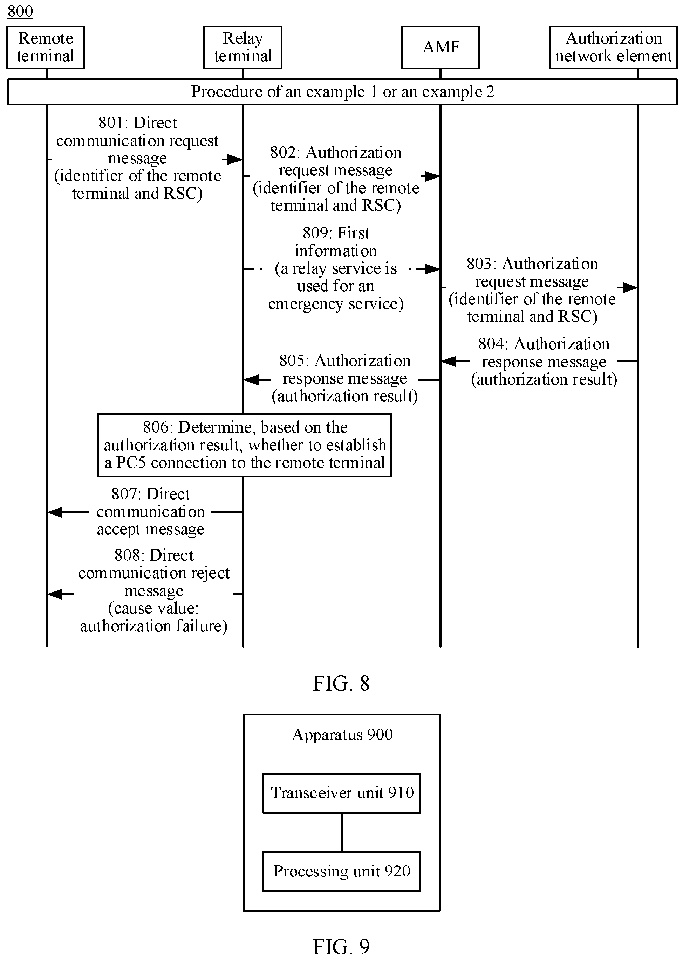

FIG. 8 is a diagram of a communication method 800 according to this application.

Steps in the method 800 may be steps performed after a remote terminal selects a relay terminal. For example, as shown in FIG. 8, the steps in the method 800 may be performed after the procedure of the example 1 or the example 2.

Step 801: The remote terminal sends a direct communication request message to the relay terminal.

Correspondingly, the relay terminal receives the direct communication request message from the remote terminal.

The direct communication request message includes an identifier of the remote terminal and an RSC. The identifier of the remote terminal includes at least one of the following: a subscription permanent identifier (subscription permanent identifier, SUPI), a subscription concealed identifier (subscription concealed identifier, SUCI), a generic public subscription identifier (generic public subscription identifier, GPSI), a permanent equipment identifier (permanent equipment identifier, PEI) or (mobile subscriber international ISDN/PSTN number, MSISDN), or an application layer identifier (for example, user information (user information, user info)) of the remote terminal. The ISDN is an integrated services digital network (integrated service digital network), and the PSTN is a public switched telephone network (public switched telephone network). The MSISDN may be understood as an identity that can be disclosed externally by the terminal, for example, a phone number of the terminal. The RSC herein is an RSC corresponding to an emergency service.

Step 802: After receiving the direct communication request message, the relay terminal sends an authorization request message to an AMF.

Correspondingly, the AMF receives the authorization request message from the relay terminal.

The authorization request message herein may be a NAS message. The authorization request message includes the identifier of the remote terminal and the RSC. The authorization request message is used to request to authorize the remote terminal to access a service corresponding to the RSC. If the authorization succeeds (success), it indicates that the remote terminal can access the service corresponding to the RSC; or if the authorization fails (failure), it indicates that the remote terminal cannot access the service corresponding to the RSC. The RSC herein is the RSC carried in the direct communication request message.

Optionally, when determining that the RSC in the direct communication request message corresponds to the emergency service, the relay terminal sends the authorization request message to the AMF, to request to authorize the remote terminal to access the service corresponding to the RSC.

Step 803: The AMF sends an authorization request message to an authorization network element.

Correspondingly, the authorization network element receives the authorization request message from the AMF.

The authorization request message herein includes the identifier of the remote terminal and the RSC. The authorization request message is used to request to authorize the remote terminal to access the service corresponding to the RSC. The RSC herein is the RSC carried in the authorization request message from the AMF.

A specific type of the authorization network element is not limited in this application. For example, the authorization network element may be a UDM, a PCF, or an AUSF.

Step 804: The authorization network element sends an authorization response message to the AMF.

Correspondingly, the AMF receives the authorization response message from the authorization network element.

The authorization response message includes an authorization result. The authorization result includes an authorization success or an authorization failure. If the authorization result is that the authorization succeeds, it indicates that the remote terminal can access the service corresponding to the RSC; or if the authorization result is that the authorization fails, it indicates that the remote terminal cannot access the service corresponding to the RSC.

In a possible implementation, the authorization network element stores subscription data of the remote terminal, and the authorization network element authorizes, based on the subscription data of the remote terminal, the remote terminal to access the service corresponding to the RSC. The subscription data of the remote terminal includes: whether the remote terminal is allowed to access the emergency service, or whether the remote terminal is allowed to access the service corresponding to the RSC.

Step 805: The AMF sends an authorization response message to the relay terminal.

Correspondingly, the relay terminal receives the authorization response message from the AMF.

The authorization response message includes the authorization result. The authorization result includes the authorization success or the authorization failure. If the authorization result is that the authorization succeeds, it indicates that the remote terminal can access the service corresponding to the RSC; or if the authorization result is that the authorization fails, it indicates that the remote terminal cannot access the service corresponding to the RSC.

Step 806: The relay terminal determines, based on the authorization result, whether to establish a PC5 connection to the remote terminal.

Specifically, if the authorization result is that the authorization succeeds, the relay terminal determines to establish the PC5 connection to the remote terminal. If the authorization result is that the authorization fails, the relay terminal determines not to establish the PC5 connection to the remote terminal.

Step 807: If determining to establish the PC5 connection to the remote terminal, the relay terminal sends a direct communication accept message to the remote terminal.

Correspondingly, the remote terminal receives the direct communication accept message from the relay terminal.

Step 808: If determining not to establish the PC5 connection to the remote terminal, the relay terminal sends a direct communication reject message to the remote terminal.

Correspondingly, the remote terminal receives the direct communication reject message from the relay terminal.

Optionally, the direct communication reject message includes a cause value, and the cause value is the authorization failure.

Optionally, the method 800 further includes step 809.

Step 809: The relay terminal sends first information to the AMF.

Correspondingly, the AMF receives the first information from the relay terminal.

The first information indicates that a relay service of the relay terminal is used for the emergency service. That is, the relay terminal notifies a network that the relay terminal is processing, executing, or relaying the emergency service.

Optionally, the first information may be carried in a service request (service request) message, a PDU session establishment (PDU session establishment) message, or a registration (registration) message.

For example, when the method 800 is applied to a layer-2 relay scenario, the method 800 may include step 809. Certainly, when the method 800 is applied to another relay scenario (for example, a layer-3 relay scenario), the method 800 may also include step 809.

It should be noted that an occasion for performing step 809 is not limited in this application.

For example, the relay terminal performs step 809 in an authorization procedure in which the remote terminal is authorized to access the emergency service (for example, as shown in FIG. 8, step 809 may be performed after step 802).

For another example, the relay terminal initiates step 809 after performing step 801.

For another example, the relay terminal initiates step 809 after performing step 806.

For another example, the relay terminal initiates step 809 after receiving a discovery message of the remote terminal (model B).

For another example, the relay terminal initiates step 809 after receiving a discovery message of the remote terminal (model B) and determining that a network accessed by the relay terminal supports the emergency service.

For another example, the relay terminal initiates step 809 after sending a discovery message (model A).

In the example 3, the relay terminal establishes the PC5 connection to the remote terminal only after determining that the remote terminal is authorized to access the emergency service, to provide the relay service of the emergency service for the remote terminal. This helps avoid access of an unauthorized remote terminal to the emergency service.

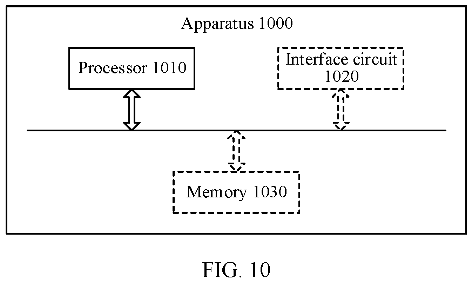

The foregoing describes in detail the methods provided in this application with reference to FIG. 4 to FIG. 8. The following describes in detail apparatus embodiments of this application with reference to FIG. 9 and FIG. 10.

It may be understood that, to implement functions in the foregoing embodiments, the apparatus in FIG. 9 or FIG. 10 includes a corresponding hardware structure and/or software module for performing each function. A person skilled in the art should be easily aware that, in this application, units and method steps in the examples described with reference to embodiments disclosed in this application can be implemented by hardware or a combination of hardware and computer software. Whether a function is performed by hardware or hardware driven by computer software depends on a particular application scenario and a design constraint condition of the technical solutions.

FIG. 9 and FIG. 10 are diagrams of structures of possible apparatuses according to embodiments of this application. The apparatuses may be configured to implement functions of the relay terminal, the policy control function network element, the remote terminal, or the application function network element in the foregoing method embodiments, and therefore can also implement beneficial effects of the foregoing method embodiments.

As shown in FIG. 9, an apparatus 900 includes a transceiver unit 910 and a processing unit 920.

In some implementations, when the apparatus 900 is configured to implement the functions of the relay terminal in the foregoing method embodiments, the processing unit 920 is configured to determine that a network accessed by the relay terminal supports an emergency service. The transceiver unit 910 is configured to send a first message, where the first message is used for a remote terminal discovering the relay terminal.

The first message is a first discovery message, and the first discovery message includes a relay service code corresponding to the emergency service; or the first message is a response message, the response message is used to respond to a second discovery message from the remote terminal, and the second discovery message includes a relay service code corresponding to the emergency service.

Optionally, the processing unit 920 is specifically configured to: when at least one of the following cases is met, determine that the network accessed by the relay terminal supports the emergency service: The relay terminal has received an emergency service support indicator from an access and mobility management function network element or an access network device; the relay terminal has stored an emergency service support indicator; or the relay terminal has established an emergency protocol data unit PDU session.

The emergency service support indicator indicates that the network accessed by the relay terminal supports the emergency service.

Optionally, the relay terminal is in an emergency registration state, the first message includes an emergency registration indicator and/or emergency registration time information, the emergency registration indicator indicates that the relay terminal is in the emergency registration state, and the emergency registration time information indicates time or remaining time in which the relay terminal is in the emergency registration state.

Optionally, the transceiver unit 910 is further configured to receive first configuration information from a policy control function network element, where the first configuration information includes the relay service code corresponding to the emergency service.

Optionally, the first configuration information further includes a priority of the relay service code corresponding to the emergency service, and the processing unit 920 is further configured to maintain or release a connection between the relay terminal and the remote terminal based on the priority, where the connection is used for transmission of the emergency service.

Optionally, the transceiver unit 910 is further configured to: receive a direct communication request message from the remote terminal, where the direct communication request message is used to request to establish a direct communication connection, and the direct communication connection is used for the transmission of the emergency service; send a second message to the access and mobility management function network element, where the second message is used to request to authorize the remote terminal to access the emergency service; receive an authorization result from the access and mobility management function network element; and if the authorization result indicates that the remote terminal is successfully authorized to access the emergency service, send a direct communication accept message to the remote terminal; or if the authorization result indicates that the remote terminal fails to be authorized to access the emergency service, send a direct communication reject message to the remote terminal.

Optionally, the transceiver unit 910 is further configured to: receive the second discovery message from the remote terminal; send a second message to the access and mobility management function network element, where the second message is used to request to authorize the remote terminal to access the emergency service; and receive an authorization result from the access and mobility management function network element. The processing unit 920 is specifically configured to: when the authorization result indicates that the remote terminal is successfully authorized to access the emergency service, determine that the network accessed by the relay terminal supports the emergency service.

Optionally, before it is determined that the network accessed by the relay terminal supports an emergency service, the transceiver unit 910 is further configured to receive the second discovery message from the remote terminal. After that a network accessed by the relay terminal supports an emergency service is determined, the transceiver unit 910 is further configured to: send a second message to the access and mobility management function network element, where the second message is used to request to authorize the remote terminal to access the emergency service; and receive an authorization result from the access and mobility management function network element. The transceiver unit 910 is specifically configured to: when the authorization result indicates that the remote terminal is successfully authorized to access the emergency service, send the response message to the remote terminal.

Optionally, the transceiver unit 910 is further configured to send first information to the access and mobility management function network element, where the first information indicates that a relay service of the relay terminal is used for the emergency service.

In some other implementations, when the apparatus 900 is configured to implement the functions of the relay terminal in the foregoing method embodiments, the processing unit 920 is configured to generate a first message, where the relay terminal is in an emergency registration state, the first message includes an emergency registration indicator and/or emergency registration time information, the emergency registration indicator indicates that the relay terminal is in the emergency registration state, and the emergency registration time information indicates time or remaining time in which the relay terminal is in the emergency registration state. The transceiver unit 910 is configured to send the first message, where the first message is used for a remote terminal discovering the relay terminal.

The first message is a first discovery message, and the first discovery message includes a relay service code corresponding to an emergency service; or the first message is a response message, the response message is used to respond to a second discovery message from the remote terminal, and the second discovery message includes a relay service code corresponding to an emergency service.

Optionally, the transceiver unit 910 is further configured to receive first configuration information from a policy control function network element, where the first configuration information includes the relay service code corresponding to the emergency service.

Optionally, the first configuration information further includes a priority of the relay service code corresponding to the emergency service. The processing unit 920 is further configured to maintain or release a connection between the relay terminal and the remote terminal based on the priority of the relay service code corresponding to the emergency service, where the connection is used for transmission of the emergency service.

Optionally, the transceiver unit 910 is further configured to: receive a direct communication request message from the remote terminal, where the direct communication request message is used to request to establish a direct communication connection, and the direct communication connection is used for the transmission of the emergency service; send a second message to an access and mobility management function network element, where the second message is used to request to authorize the remote terminal to access the emergency service; receive an authorization result from the access and mobility management function network element; and if the authorization result indicates that the remote terminal is successfully authorized to access the emergency service, send a direct communication accept message to the remote terminal; or if the authorization result indicates that the remote terminal fails to be authorized to access the emergency service, send a direct communication reject message to the remote terminal.

Optionally, the transceiver unit 910 is further configured to: receive the second discovery message from the remote terminal; send a second message to an access and mobility management function network element, where the second message is used to request to authorize the remote terminal to access the emergency service; and receive an authorization result from the access and mobility management function network element. The transceiver unit 910 is specifically configured to: when the authorization result indicates that the remote terminal is successfully authorized to access the emergency service, send the response message to the remote terminal.

Optionally, the transceiver unit 910 is further configured to send first information to the access and mobility management function network element, where the first information indicates that a relay service of the relay terminal is used for the emergency service.

When the apparatus 900 is configured to implement the functions of the PCF in the foregoing method embodiments, the transceiver unit 910 or the processing unit 920 is configured to obtain a relay service code corresponding to an emergency service. The transceiver unit 910 is configured to send first configuration information to a relay terminal, where the first configuration information includes the relay service code corresponding to the emergency service.

Optionally, the first configuration information further includes a priority of the relay service code corresponding to the emergency service.

Optionally, the transceiver unit 910 is specifically configured to: when a network accessed by the relay terminal supports the emergency service, send the first configuration information to the relay terminal.

Optionally, the processing unit 920 is further configured to: when at least one of the following cases is met, determine that the network accessed by the relay terminal supports the emergency service: The policy control function network element has received an emergency service support indicator from an access and mobility management function network element; or the policy control function network element has stored or preconfigured an emergency service support indicator.

The emergency service support indicator indicates that the network accessed by the relay terminal supports the emergency service.

Optionally, the transceiver unit 910 is further configured to send second configuration information to a remote terminal, where the second configuration information includes the relay service code corresponding to the emergency service.

Optionally, the second configuration information further includes the priority of the relay service code corresponding to the emergency service.

Optionally, the transceiver unit 910 is specifically configured to obtain the relay service code corresponding to the emergency service from an application function network element.

When the apparatus 900 is configured to implement the functions of the remote terminal in the foregoing method embodiments, the transceiver unit 910 is configured to receive a first message from a first relay terminal, where the first message is used for the remote terminal discovering the first relay terminal, the first message includes an emergency registration indicator and/or emergency registration time information, the emergency registration indicator indicates that the first relay terminal is in an emergency registration state, and the emergency registration time information indicates time or remaining time in which the first relay terminal is in the emergency registration state. The processing unit 920 is configured to select a relay terminal based on the first message.

The first message is a first discovery message, and the first discovery message includes a relay service code corresponding to an emergency service; or the first message is a response message, the response message is used to respond to a second discovery message sent by the remote terminal, and the second discovery message includes a relay service code corresponding to an emergency service.

Optionally, the transceiver unit 910 is further configured to receive second configuration information from a policy control function network element, where the second configuration information includes the relay service code corresponding to the emergency service.

Optionally, the second configuration information further includes a priority of the relay service code corresponding to the emergency service. The processing unit 920 is further configured to maintain or release a connection between the remote terminal and the relay terminal based on the priority of the relay service code corresponding to the emergency service, where the connection is used for transmission of the emergency service.

When the apparatus 900 is configured to implement the functions of the AF in the foregoing method embodiments, the processing unit 920 is configured to determine a relay service code corresponding to an emergency service; and the transceiver unit 910 is configured to send the relay service code corresponding to the emergency service to a policy control function network element.

For more detailed descriptions of the transceiver unit 910 and the processing unit 920, refer to related descriptions in the foregoing method embodiments. Details are not described herein again.

As shown in FIG. 10, an apparatus 1000 includes a processor 1010. The processor 1010 is coupled to a memory 1030, and the memory 1030 is configured to store instructions. When the apparatus 1000 is configured to implement the foregoing methods, the processor 1010 is configured to execute the instructions in the memory 1030, to implement functions of the foregoing processing unit 920.

Optionally, the apparatus 1000 further includes the memory 1030.

Optionally, the apparatus 1000 further includes an interface circuit 1020. The processor 1010 and the interface circuit 1020 are coupled to each other. It may be understood that the interface circuit 1020 may be a transceiver or an input/output interface. When the apparatus 1000 is configured to implement the foregoing methods, the processor 1010 is configured to execute the instructions to implement functions of the foregoing processing unit 920, and the interface circuit 1020 is configured to implement functions of the foregoing transceiver unit 910.

For example, when the apparatus 1000 is a chip used in the relay terminal, the chip implements the functions of the relay terminal in the foregoing method embodiments. The chip receives information from another module (for example, a radio frequency module or an antenna) in the relay terminal, where the information is sent by another apparatus to the relay terminal; or the chip sends information to another module (for example, a radio frequency module or an antenna) in the relay terminal, where the information is sent by the relay terminal to another apparatus.

For example, when the apparatus 1000 is a chip used in the policy control function network element, the chip implements the functions of the policy control function network element in the foregoing method embodiments. The chip receives information from another module (for example, a radio frequency module or an antenna) in the policy control function network element, where the information is sent by another apparatus to the policy control function network element; or the chip sends information to another module (for example, a radio frequency module or an antenna) in the policy control function network element, where the information is sent by the policy control function network element to another apparatus.

For example, when the apparatus 1000 is a chip used in the remote terminal, the chip implements the functions of the remote terminal in the foregoing method embodiments. The chip receives information from another module (for example, a radio frequency module or an antenna) in the remote terminal, where the information is sent by another apparatus to the remote terminal; or the chip sends information to another module (for example, a radio frequency module or an antenna) in the remote terminal, where the information is sent by the remote terminal to another apparatus.

For example, when the apparatus 1000 is a chip used in the application function network element, the chip implements the functions of the application function network element in the foregoing method embodiments. The chip receives information from another module (for example, a radio frequency module or an antenna) in the application function network element, where the information is sent by another apparatus to the application function network element; or the chip sends information to another module (for example, a radio frequency module or an antenna) in the application function network element, where the information is sent by the application function network element to another apparatus.

This application further provides a communication apparatus, including a processor. The processor is coupled to a memory. The memory is configured to store a computer program or instructions and/or data. The processor is configured to: execute the computer program or the instructions stored in the memory, or read the data stored in the memory, to perform the methods in the foregoing method embodiments. Optionally, there are one or more processors. Optionally, the communication apparatus includes the memory. Optionally, there are one or more memories. Optionally, the memory and the processor are integrated together or disposed separately.

This application further provides a computer-readable storage medium. The computer-readable storage medium stores computer instructions for implementing the method performed by the relay terminal, the policy control function network element, the remote terminal, or the application function network element in the foregoing method embodiments.

This application further provides a computer program product, including instructions. When the instructions are executed by a computer, the method performed by the relay terminal, the policy control function network element, the remote terminal, or the application function network element in the foregoing method embodiments is implemented.

This application further provides a communication system. The communication system includes at least one of the relay terminal, the policy control function network element, the remote terminal, or the application function network element in the foregoing embodiments.

For explanations and beneficial effects of related content of any one of the apparatuses provided above, refer to the corresponding method embodiment provided above. Details are not described herein again.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented by hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in the relay terminal, the policy control function network element, the remote terminal, or the application function network element. Certainly, the processor and the storage medium may alternatively exist in the relay terminal, the policy control function network element, the remote terminal, or the application function network element as discrete components.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

Unless otherwise specified, meanings of all technical and scientific terms used in embodiments of this application are the same as those usually understood by a person skilled in the art of this application. The terms used in this application are merely intended to describe specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining, by a relay terminal, that a network accessed by the relay terminal supports an emergency service; and
sending, by the relay terminal, a first message, wherein the first message is used for a remote terminal discovering the relay terminal, wherein
the first message is a first discovery message, and the first discovery message comprises a relay service code corresponding to the emergency service; or the first message is a response message, the response message is used to respond to a second discovery message from the remote terminal, and the second discovery message comprises a relay service code corresponding to the emergency service.

2. The method according to claim 1, wherein the determining, by a relay terminal, that a network accessed by the relay terminal supports an emergency service comprises:
when at least one of the following cases is met, determining, by the relay terminal, that the network accessed by the relay terminal supports the emergency service:
the relay terminal has received an emergency service support indicator from an access and mobility management function network element or an access network device;
the relay terminal has stored an emergency service support indicator; or
the relay terminal has established an emergency protocol data unit PDU session, wherein
the emergency service support indicator indicates that the network accessed by the relay terminal supports the emergency service.

3. The method according to claim 1 or 2, wherein
the relay terminal is in an emergency registration state, the first message comprises an emergency registration indicator and/or emergency registration time information, the emergency registration indicator indicates that the relay terminal is in the emergency registration state, and the emergency registration time information indicates time and/or remaining time in which the relay terminal is in the emergency registration state.

4. The method according to any one of claims 1 to 3, wherein the method further comprises:
receiving, by the relay terminal, first configuration information from a policy control function network element, wherein the first configuration information comprises the relay service code corresponding to the emergency service.

5. The method according to claim 4, wherein the first configuration information further comprises a priority of the relay service code corresponding to the emergency service, and the method further comprises:
maintaining or releasing, by the relay terminal, a connection between the relay terminal and the remote terminal based on the priority, wherein the connection is used for transmission of the emergency service.

6. The method according to any one of claims 1 to 5, wherein the method further comprises:
receiving, by the relay terminal, a direct communication request message from the remote terminal, wherein the direct communication request message is used to request to establish a direct communication connection, and the direct communication connection is used for the transmission of the emergency service;
sending, by the relay terminal, a second message to the access and mobility management function network element, wherein the second message is used to request to authorize the remote terminal to access the emergency service;
receiving, by the relay terminal, an authorization result from the access and mobility management function network element; and
if the authorization result indicates that the remote terminal is successfully authorized to access the emergency service, sending, by the relay terminal, a direct communication accept message to the remote terminal; or
if the authorization result indicates that the remote terminal fails to be authorized to access the emergency service, sending, by the relay terminal, a direct communication reject message to the remote terminal.

7. The method according to any one of claims 1 to 5, wherein the method further comprises:
receiving, by the relay terminal, the second discovery message from the remote terminal;
sending, by the relay terminal, a second message to the access and mobility management function network element, wherein the second message is used to request to authorize the remote terminal to access the emergency service; and
receiving, by the relay terminal, an authorization result from the access and mobility management function network element; and
the determining, by a relay terminal, that a network accessed by the relay terminal supports an emergency service comprises:
when the authorization result indicates that the remote terminal is successfully authorized to access the emergency service, determining, by the relay terminal, that the network accessed by the relay terminal supports the emergency service.

8. The method according to any one of claims 1 to 5, wherein
before the determining, by a relay terminal, that a network accessed by the relay terminal supports an emergency service, the method further comprises:
receiving, by the relay terminal, the second discovery message from the remote terminal;
after the determining, by a relay terminal, that a network accessed by the relay terminal supports an emergency service, the method further comprises:
sending, by the relay terminal, a second message to the access and mobility management function network element, wherein the second message is used to request to authorize the remote terminal to access the emergency service; and
receiving, by the relay terminal, an authorization result from the access and mobility management function network element; and
the sending, by the relay terminal, a first message comprises:
when the authorization result indicates that the remote terminal is successfully authorized to access the emergency service, sending, by the relay terminal, the response message to the remote terminal.

9. The method according to any one of claims 1 to 8, wherein the method further comprises:
sending, by the relay terminal, first information to the access and mobility management function network element, wherein the first information indicates that a relay service of the relay terminal is used for the emergency service.

10. The method according to any one of claims 1 to 8, wherein the method further comprises:
receiving, by the relay terminal, a seventh message from the remote terminal, wherein the seventh message is used to request to establish a connection to the relay terminal, and the connection is used for the transmission of the emergency service; and
after receiving the seventh message, if the relay terminal has no emergency protocol data unit PDU session, requesting, by the relay terminal, to establish the emergency PDU session.

11. The method according to claim 10, wherein
the seventh message is a direct communication request message.

12. A communication method, wherein the method comprises:
obtaining, by a policy control function network element, a relay service code corresponding to an emergency service; and
sending, by the policy control function network element, first configuration information to a relay terminal, wherein the first configuration information comprises the relay service code corresponding to the emergency service.

13. The method according to claim 12, wherein
the first configuration information further comprises a priority of the relay service code corresponding to the emergency service.

14. The method according to claim 12 or 13, wherein the sending, by the policy control function network element, first configuration information to a relay terminal comprises:
when a network accessed by the relay terminal supports the emergency service, sending, by the policy control function network element, the first configuration information to the relay terminal.

15. The method according to claim 14, wherein the method further comprises:
when at least one of the following cases is met, determining, by the policy control function network element, that the network accessed by the relay terminal supports the emergency service:
the policy control function network element has received an emergency service support indicator from an access and mobility management function network element; or
the policy control function network element has stored or preconfigured an emergency service support indicator, wherein
the emergency service support indicator indicates that the network accessed by the relay terminal supports the emergency service.

16. The method according to any one of claims 12 to 15, wherein the method further comprises:
sending, by the policy control function network element, second configuration information to a remote terminal, wherein the second configuration information comprises the relay service code corresponding to the emergency service.

17. The method according to claim 16, wherein
the second configuration information further comprises the priority of the relay service code corresponding to the emergency service.

18. The method according to any one of claims 12 to 17, wherein the obtaining, by a policy control function network element, a relay service code corresponding to an emergency service comprises:
obtaining, by the policy control function network element, the relay service code corresponding to the emergency service from an application function network element.

19. A communication method, wherein the method comprises:
receiving, by a remote terminal, a first message from a first relay terminal, wherein the first message is used for the remote terminal discovering the first relay terminal, the first message comprises an emergency registration indicator and/or emergency registration time information, the emergency registration indicator indicates that the first relay terminal is in an emergency registration state, and the emergency registration time information indicates time and/or remaining time in which the first relay terminal is in the emergency registration state; and
selecting, by the remote terminal, a relay terminal based on the first message, wherein
the first message is a first discovery message, and the first discovery message comprises a relay service code corresponding to an emergency service; or the first message is a response message, the response message is used to respond to a second discovery message sent by the remote terminal, and the second discovery message comprises a relay service code corresponding to an emergency service.

20. The method according to claim 19, wherein the method further comprises:
receiving, by the remote terminal, second configuration information from a policy control function network element, wherein the second configuration information comprises the relay service code corresponding to the emergency service.

21. The method according to claim 20, wherein the second configuration information further comprises a priority of the relay service code corresponding to the emergency service, and the method further comprises:
maintaining or releasing, by the remote terminal, a connection between the remote terminal and the relay terminal based on the priority of the relay service code corresponding to the emergency service, wherein the connection is used for transmission of the emergency service.

22. A communication method, wherein the method comprises:
generating, by a relay terminal, a first message, wherein the relay terminal is in an emergency registration state, the first message comprises an emergency registration indicator and/or emergency registration time information, the emergency registration indicator indicates that the relay terminal is in the emergency registration state, and the emergency registration time information indicates time and/or remaining time in which the relay terminal is in the emergency registration state; and
sending, by the relay terminal, the first message, wherein the first message is used for a remote terminal discovering the relay terminal, wherein
the first message is a first discovery message, and the first discovery message comprises a relay service code corresponding to an emergency service; or the first message is a response message, the response message is used to respond to a second discovery message from the remote terminal, and the second discovery message comprises a relay service code corresponding to an emergency service.

23. The method according to claim 22, wherein the method further comprises:
receiving, by the relay terminal, first configuration information from a policy control function network element, wherein the first configuration information comprises the relay service code corresponding to the emergency service.

24. The method according to claim 23, wherein the first configuration information further comprises a priority of the relay service code corresponding to the emergency service, and the method further comprises:
maintaining or releasing, by the relay terminal, a connection between the relay terminal and the remote terminal based on the priority of the relay service code corresponding to the emergency service, wherein the connection is used for transmission of the emergency service.

25. The method according to any one of claims 22 to 24, wherein the method further comprises:
receiving, by the relay terminal, a direct communication request message from the remote terminal, wherein the direct communication request message is used to request to establish a direct communication connection, and the direct communication connection is used for the transmission of the emergency service;
sending, by the relay terminal, a second message to an access and mobility management function network element, wherein the second message is used to request to authorize the remote terminal to access the emergency service;
receiving, by the relay terminal, an authorization result from the access and mobility management function network element; and
if the authorization result indicates that the remote terminal is successfully authorized to access the emergency service, sending, by the relay terminal, a direct communication accept message to the remote terminal; or
if the authorization result indicates that the remote terminal fails to be authorized to access the emergency service, sending, by the relay terminal, a direct communication reject message to the remote terminal.

26. The method according to any one of claims 22 to 24, wherein
the method further comprises:
receiving, by the relay terminal, the second discovery message from the remote terminal;
sending, by the relay terminal, a second message to an access and mobility management function network element, wherein the second message is used to request to authorize the remote terminal to access the emergency service; and
receiving, by the relay terminal, an authorization result from the access and mobility management function network element; and
the sending, by the relay terminal, the first message comprises:
when the authorization result indicates that the remote terminal is successfully authorized to access the emergency service, sending, by the relay terminal, the response message to the remote terminal.

27. The method according to any one of claims 22 to 26, wherein the method further comprises:
sending, by the relay terminal, first information to the access and mobility management function network element, wherein the first information indicates that a relay service of the relay terminal is used for the emergency service.

28. The method according to any one of claims 22 to 27, wherein the method further comprises:
receiving, by the relay terminal, a seventh message from the remote terminal, wherein the seventh message is used to request to establish a connection to the relay terminal, and the connection is used for the transmission of the emergency service; and
after receiving the seventh message, if the relay terminal has no emergency protocol data unit PDU session, requesting, by the relay terminal, to establish the emergency PDU session.

29. The method according to claim 28, wherein
the seventh message is a direct communication request message.

30. A communication apparatus, comprising:
a processor, configured to execute a computer program stored in a memory, to enable the apparatus to perform the method according to any one of claims 1 to 11, perform the method according to any one of claims 12 to 18, perform the method according to any one of claims 19 to 21, or perform the method according to any one of claims 22 to 29.

31. The apparatus according to claim 30, wherein the apparatus further comprises the memory.

32. A computer-readable storage medium, wherein the computer-readable storage medium stores a computer program, and when the computer program is run on a computer, the computer is enabled to perform the method according to any one of claims 1 to 11, perform the method according to any one of claims 12 to 18, perform the method according to any one of claims 19 to 21, or perform the method according to any one of claims 22 to 29.

33. A computer program product, wherein the computer program product comprises instructions used to perform the method according to any one of claims 1 to 11, comprises instructions used to perform the method according to any one of claims 12 to 18, comprises instructions used to perform the method according to any one of claims 19 to 21, or comprises instructions used to perform the method according to any one of claims 22 to 29.

34. A communication system, comprising a relay terminal and a remote terminal, wherein
the relay terminal is configured to perform the method according to any one of claims 1 to 11.

35. The system according to claim 34, wherein the remote terminal is configured to perform the method according to any one of claims 19 to 21.

36. The system according to claim 34 or 35, wherein the communication system further comprises a policy control function network element; and
the policy control function network element is configured to perform the method according to any one of claims 12 to 18.

37. A communication system, comprising a relay terminal and a remote terminal, wherein
the relay terminal is configured to perform the method according to any one of claims 22 to 29; and
the remote terminal is configured to perform the method according to any one of claims 18 to 21.

38. The system according to claim 37, wherein the communication system further comprises a policy control function network element; and
the policy control function network element is configured to perform the method according to any one of claims 14 to 18.
